# EUROPEAN PATENT SPECIFICATION

(11) **EP 1 458 453 B1**
(45) Date of publication and mention of the grant of the patent: **28.04.2010**
(21) Application number: 02801431.4
(22) Date of filing: 21.10.2002
(51) Int. Cl.: B01D 33/03, B07B 1/46, B07B 1/00, B32B 37/12

(54) **A METHOD OF MAKING A SCREEN FOR A VIBRATORY SEPARATOR**
VERFAHREN ZUR HERSTELLUNG EINES SIEBS FÜR EINE VIBRATIONSTRENNVORRICHTUNG
PROCEDE DE FABRICATION D'UN CRIBLE POUR SEPARATEUR VIBRANT

(30) Priority: 19.10.2001 US 37474; 19.10.2001 US 87025
(43) Date of publication of application: 22.09.2004
(73) Proprietor: Varco I/P, Inc., Houston TX 77042-4200 (US)
(72) Inventor: ADAMS, Thomas Cole, Hockley, TX 77447 (US); SEYFFERT, Kenneth Wayne, Houston, TX 77018 (US); LARGENT, David Wayne, Cleveland, TX 77327 (US); SCHULTE, David Lee Jr., Broussard, LA 70518 (US); GRICHAR, Charles, Newton, Houston, TX 77009 (US); LEONE, Vincent, Dominick, Houston, TX 77069 (US); WALKER, Jeffrey, Earl, Houston, TX 77041 (US); MCCLUNG, Guy, Lamont, III, Spring, TX 77379 (US); WARD, Kerry Thomas, Cypress, TX 77429 (US)
(74) Representative: Lucas, Brian Ronald
(86) International application number: PCT/GB2002/004757
(87) International publication number: WO 2003/033102

(56) References cited:
- EP-A1- 0 094 120
- WO-A-00/25890
- WO-A-01/39861
- WO-A-01/39862
- WO-A-01/76719
- WO-A-02/00360
- US-A- 2 970 787

## Description

The present invention relates to a method of making a screen for a vibratory separator, a screen and an apparatus for making a screen of the invention. The screens are more particularly, but not exclusively, for use in separating solids from drilling mud used in the drilling of oil and gas wells.

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids, to be removed from the drilling mud. This is achieved by processing the drilling fluid. The first part of the process is to separate the solids from the solids laden drilling mud. This is at least partly achieved with a shale shaker, such as those disclosed in US 5,265,730, WO 96/33792 and WO 98/16328.

Shale shakers generally comprise an open bottomed basket having one open discharge end and a solid walled feed end. A number of rectangular screens are arranged in the basket, which are held in C-channel rails located on the basket walls, such as those disclosed in GB-A-2,176,424. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces the solids to move along the screens towards the open discharge end. The recovered drilling mud is received in the receptor for further processing and the solids pass over the discharge end of the basket into the ditch or skip.

The screens are generally of one of two types: hookstrip; and pre-tensioned.

The hook-strip type of screen comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. The supporting mesh may be provided with or replaced by a panel having apertures therein.

The pre-tensioned type of screen comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen is then inserted into C-channel rails arranged in a basket of a shale shaker. An example of this type of screen is disclosed in GB-A-1, 578, 948. The layers of mesh may be adhered to a panel having apertures therein, which panel is attached to the frame.

The sandwich of layers of wire mesh may be formed into three dimensional screens, such as those disclosed in WO 96/04060, US-A-5,417,858 or US-A-5,417,859.

A further example of a known rigid support on which the screens may be arranged is disclosed in WO 01/76719, which discloses, amongst other things, a flat panel like portion having apertures therein and wing portions which are folded to form a support structure, which may be made from a single sheet of material. This rigid support has been assigned the Trade Mark "UNIBODY" by the applicants.

The layers of mesh in the screens wears out frequently and therefore needs to be easily replaceable. Shale shakers are generally in the order of 5ft wide and loft long. A screen of dimensions 5ft wide by 10ft long is difficult to handle, replace and transport. It is known to use two, three, four or more screens in a single shale shaker. A standard size of screen currently used is of the order of 5ft by 4ft.

A prior method of manufacturing screens comprises the steps of cutting layer of screening material to approximately the size required to fit the shale shaker. Each layer in the sandwich may be tensioned individually or together and placed in a sandwich of three layers and glued together. The screen may then be glued on to a frame or attached to hookstrips and have any rough edges or overhang trimmed.

WO 01/39861 discloses a revolutionary method of making a screen, comprising the steps of placing at least two layers of screening material one on top of the other, introducing glue to one of the at least two layers of screening material for adhering at least portions of them together, said glue introduced to one of the at least two layers of screening material from a roller with a patterned surface thereon such that the amount of glue is introduced to the at least two layers of screening material in a pattern substantially corresponding to said patterned surface of the roller. An adjustable roller, whose tension against the mesh is adjustable by moving the roller up/down, supports the coarse mesh 4 with glue thereon.

WO 01/39862 discloses a revolutionary method for making a screen for a vibratory separator, the method comprising placing a first layer of screening material below a glue application apparatus, and applying with the glue application apparatus an amount of glue in a pattern to a portion of the first layer of screening material. Preferably, the first layer of screening material is removably wound onto a first rotatable roll, the method further comprising unrolling the first layer of screening material from the first roll and positioning a portion of the first layer beneath the glue application apparatus.

The sandwich of layers of mesh may be used in either the hookstrip type screen or the pre-tensioned type screen, or any other screen assembly which may be used in a vibratory separator, such as a shale shaker.

The inventors have observed that layers of mesh are not tensioned correctly using prior art methods.

According to a first aspect of the present invention, there is provided a method for making a shale shaker screen, the method comprising the steps of unrolling a first layer of wire mesh screening material from a first roll and applying glue to said first layer of wire mesh screening material with a glue application apparatus, and unrolling at least a second layer of wire mesh screening material and applying the second layer of wire mesh screening material to the first layer of wire mesh screening material to form a shale shaker screen wherein a rate of movement of said first layer of wire mesh screening material beneath the glue application apparatus is between 0.025m/s to 0.15m/s (5 feet per minute to 30 feet per minute) characterised in that the method further comprises the step of passing the first layer of wire mesh screening material through an isolation nip formed by at least a first and second rollers.

Preferably, the method comprises the step of applying the glue in a glue pattern to the first layer of wire mesh screening material, the applying carried out by powered moving mechanical glue application means. Advantageously, the glue is heated moisture-curing hot melt glue, the method further comprising the step of heating the glue. Preferably, the method further comprises the step of applying moisture to glue in the glue pattern following application of the moisture-curing hot melt glue to the first layer of wire mesh screening material. Advantageously, the further comprises the step of moving with powered mechanical screen movement apparatus the first layer of wire mesh screening material beneath the powered moving mechanical glue application means. Preferably, the powered moving mechanical glue application means includes a patterned roller having a glue pattern thereon for applying glue in said glue pattern to the first layer of wire mesh screening material. Advantageously, the step of moving at least one glue dispensing manifold with a plurality of spaced-apart glue dispensing nozzles above the first layer of wire mesh screening material to apply the glue pattern. Preferably, the method further comprises the steps of moving two spaced-apart glue dispensing manifolds each with a plurality of spaced-apart glue dispensing nozzles above the first layer of wire mesh screening material to apply the glue pattern. Advantageously, the at least one glue nozzle is secured immovably to a main body, the method further comprising applying with the at least one glue nozzle secured immovably to the main body at least one shearable glue bead across a width of the wire mesh screening material so that shearing the wire mesh screening material along the length of the at least one shearable glue bead produces separate sections of the wire mesh screening material. Preferably, the at least one nozzle secured immovably to the main body is a plurality of spaced-apart glue nozzles, each for applying a separate shearable glue bead to the first layer of wire mesh screening material, the method further comprising applying a plurality of spaced-apart shearable glue beads to the first layer of wire mesh screening material across the width thereof.

Preferably, the method further comprises the step of tensioning the first layer of wire mesh screening material below the glue application apparatus.

Advantageously, the method further comprises continuously moving the first layer of wire mesh screening material beneath the glue application apparatus. Preferably, the method further comprises the step of introducing a third layer of screening to form a screen having three layers of wire mesh screening material. Preferably, the third layer of wire mesh screening material is combined with the first and second layers of wire mesh screening material following application of glue to the first layer of wire mesh screening material.

Advantageously, the method comprises the further step of mounting the screen assembly on screen assembly support means. Preferably, the screen assembly support means is from the group consisting of frame, strip support, perforated sheet metal, and perforated plate. Preferably, the method further comprises the step of attaching hookstrip apparatus on each of two spaced-apart sides of the layers of wire mesh screening material.

Advantageously, the method further comprises the step of rolling the first and second layer of wire mesh screening material in a roll following application of glue thereto. Advantageously, the method further comprises positioning separator material with respect to the at least one layer of wire mesh screening material to prevent undesired gluing together of wire mesh screening material within the roll.

Preferably, the first layer of wire mesh screening material of coarse mesh. Advantageously, the pattern includes a plurality of intersections of lines of glue. Preferably, the further comprises using at least one layer of wire mesh screening material is corrugated.

Advantageously, the glued together screen is wound on a rewind apparatus characterised in that a reel of separator material is unwound from a roll on to at least one surface of said screen.

Preferably, coolant is applied to the glued together screen. Advantageously, the coolant is water. Advantageously, the coolant is sprayed on to said screen. Preferably, said coolant is applied to the top of the screen. Advantageously, the coolant is applied to the side of the screen to which the at least second layer of wire mesh screening material was applied.

Advantageously, the method further comprises the step of unrolling the second layer of wire mesh screening material is unwound over a banana roller.

The wire mesh screening material fed through such machines may be any desired dimensions, including, but not limited to, dimensions corresponding to the typical lengths or widths typically used to make known screens for shale shakers. PUR hot melt glue, e.g., but not limited to, commercially available Henkel R 183 B Glue from the Henkel Co. or similar glues may be used.

A "nip" or dual opposed rollers (optionally under pressure) between which multiple screen layers being glued together are passed, glue moves and/or is squeezed upwardly between mesh in the screening layers. In one aspect a bottom nip roller (in one embodiment coated with a non-stick substance or tape) pushes up against a lower surface of a bottommost screen layer, preventing glue from moving down and out from the screen layer. Optionally, such a bottom roller may be cooled (by any known method and/or device or apparatus, including but not limited to, those disclosed or referred to herein), thus increasing the viscosity of at least lower portions, if not a large portion of the glue and inhibiting downward travel of the glue. The wires or strands of the mesh(es) restrict side-to-side glue movement and the glue, therefore, can only travel up into layers above a layer or layers to which the glue was initially applied. Optionally, the top roller is heated by any known method and/or device or apparatus (including, but not limited to, any disclosed or referred to herein), which heats upper parts and/or layers of mesh(es) which results in the heating of upper portions of glue that has been applied to one or more layers, thus reducing the viscosity of these portions and facilitating upward passage of the glue through the upper layer (s) of wire mesh screening material. Optionally the two rollers are forced together (in one aspect a pressure between about twenty to about fifty p.s.i. (1.4 to 3.5 bars)). squeezing screening layers together and forcing glue to move up through the mesh of the layers.

In certain embodiments of such methods moving mechanical apparatus powered e.g. by electricity or by fluid driven power apparatus (e.g. but not limited to, apparatus powered by fluid under pressure, e.g., but not limited to, hydraulic fluid under pressure powering hydraulic pumps and/or motors) applies glue in a desired pattern to one, two, three or more layers of wire mesh screening material. Upon curing, the glue holds together screen assemblies in accordance with the present invention which have one, two or more layers of wire mesh screening material, bonded together or not, connected together or not, with or without a lower support structure, and with or without side hookstrip mounting apparatus. Any suitable wire mesh screening material disclosed herein or disclosed in any patent or application referred to herein may be used. In one aspect wire mesh screening material is used suitable for a screen assembly for screening drilling fluid introduced to a shale shaker that has one or more such screen assemblies. In certain aspects the glue used for applying a glue pattern is such that it rests on top of the wire mesh screening material even in an uncured or un-set state and does not fall through or out from the wire mesh screening material and rests on it for further steps in the method, or is such that if it does tend to move downwardly through layer(s) of wire mesh screening material its rate of movement is such that (and it is sufficiently viscous and/or it is sufficiently cured) it does not fall out from the screening assembly.

In certain methods that are automated in accordance with the present invention, powered mechanical movement apparatus moves the layer(s) of wire mesh screening material with respect to glue application apparatus. In one aspect the powered moving mechanical apparatus uses a patterned roller to apply glue in a pattern to wire mesh screening material. In another aspect, one, two or a larger plurality of glue nozzles are moved above the wire mesh screening material (which itself may be stationary or may be moving beneath the glue nozzles) to apply the glue in a desired pattern. In one particular aspect a plurality of spaced-apart glue dispensers on a manifold are moved above the wire mesh screening material. In certain aspects the manifold is oscillated with respect to the wire mesh screening material and, in one aspect, there are two, three or more such manifolds. Any desired glue pattern may be applied. A screen or screen assembly thus made in accordance with the present invention may, optionally, be mounted to lower support, such as a tubular frame, on a strip support, rod support, on a layer of coarse mesh or gridwork, or on a perforated plate or perforated piece of sheet metal. Such mounting may be any suitable known method disclosed in the art and any suitable known frame, strip support, rod support, coarse layer, or perforated plate may be used - including, but not limited to, those disclosed in any patent or application referred to herein. Alternatively, in accordance with the present invention, hookstrips may be applied on spaced-apart sides of glued wire mesh screening material (s) .

In certain aspects of methods in accordance with the present invention glue is applied with at least two nozzles so that lines of glue intersect and, at points of intersection, the glue pattern is stronger (due to the fact there is relatively more glue present at such points) than at points along either glue line where the lines do not intersect.

In one such method in which a glue pattern is applied to a substrate, the glue pattern while still manipulable is removed from the substrate and is then applied in pattern form to wire mesh screening material.

The layer or layers may be mounted on frame apparatus which may include a solid side support on each of two spaced apart sides of the layer(s), or a full four sided screen frame, with or without one or more interior crossmembers such as tubular rods or hollow tubular members extending between the sides. A strip support or strips of support material (e.g. flat steel) may be used beneath screen layer(s). In some aspects, hookstrips are used on opposed sides or ends of a screen made by a method in accordance with the present invention so that it can be mounted in a shaker or other separator apparatus

By maintaining flat the layer or layers which receive the hot glue from one or more dispensing nozzles, uniformity of deposited glue bead size is enhanced. If the distance between the nozzle and the layer(s) varies, glue bead size can be non-uniform. In one aspect the distance from the outlet end of the nozzle(s) to the mesh layer or layers onto which the glue is deposited is between about 6.3mm to 19mm (one-fourth to three-fourth inches), and in one particular aspect is about 13mm (one-half inch). Rotating rollers help reduce vibration in the mesh layer(s) being processed.

For a better understanding of the present invention, reference will now be made, by way of example, to the accompanying drawings, in which:
Figure 1 is a side schematic view of a first embodiment of an apparatus for making screens disclosed in PCT Publication No. WO 01/39861, indicating steps in a method of making screens in accordance the present invention;
Figure 2 is a side schematic view of a known embodiment of an apparatus for making screens disclosed in PCT Publication No. WO 01/39861;
Figure 3 is an enlarged side view of an alternative roller apparatus disclosed in PCT Publication No. WO 01/39861 for use in the apparatus as shown in Figures 1 or 2;
Figure 4A is an enlarged front view of part of a pattern roller disclosed in PCT Publication No. WO 01/39861 for apparatus as in Figure 1;
Figure 4B shows a glue bead in cross-section;
Figure 5A is an end view of a first embodiment of a pattern roller disclosed in PCT Publication No. WO 01/39861;
Figure 5B is a side view of the roller of Figure 5A;
Figure 6A is an end view of a second embodiment of pattern roller disclosed in PCT Publication No. WO 01/39861;
Figure 6B is a side view of the roller of Figure 6A;
Figures 7 and 8 are side views of alternative pattern rollers disclosed in PCT Publication No. WO 01/39861;
Figure 9 is a top view of a screen;
Figure 10 is a top view of a screen; and
Figure 11 is a side view of a pattern roller disclosed in PCT Publication No. WO 01/39861;
Figure 12 is a side schematic view of a known system disclosed in PCT Publication No. WO 01/39862;
Figure 13A is a top schematic view of part of a system as in Figure 12;
Figure 13B is a top schematic view of a part of a system disclosed in PCT Publication No. WO 01/39862, indicating a path of operation of part of the system;
Figure 14 is a top schematic view of a part of a system disclosed in PCT Publication No. WO 01/39862, indicating an alternative path of operation of part of the system;
Figure 15 is a top schematic view of a part of a system disclosed in PCT Publication No. WO 01/39862, indicating an alternative path of operation of part of the system;
Figure 16 is a top schematic view of a part of a system disclosed in PCT Publication No. WO 01/39862, indicating an alternative path of operation of part of the system; and
Figures 17A to 17D are top views of glue patterns applied by a system disclosed in PCT Publication No. WO 01/39862;
Figure 18A is a schematic under plan view of an apparatus for applying glue to a screen used in an apparatus and method in accordance with the present invention;
Figures 18B and 18C are top plan views of glue patterns used in a screen assembly and in a method in accordance with the present invention;
Figures 19A to 19D are top plan views of glue patterns used in a screen assembly and in a method in accordance with the present invention;
Figure 20 is a top plan view of a screen component used in a screen assembly;
Figure 21A is an end elevation of a rolled up screen component, for example, like the screen component of Figure 20;
Figure 21B is an end elevation of a rolled up screen component for example, like the screen component of Figure 20;
Figure 22A is a top plan view of a substrate for glue for a screen assembly and used in a method in accordance with the present invention;
Figure 22B is a top plan view that shows the substrate of Figure 22A with a glue pattern deposited thereon;
Figure 22C is a top plan view of the glue pattern of Figure 22B removed from the substrate of Figure 5A;
Figure 22D is an end elevation of the glue pattern of Figure 5C in a roll; and
Figure 23A to 23C are each a side elevations of a screen assembly;
Figure 24C is a top plan view of a screen assembly for a vibratory separator;

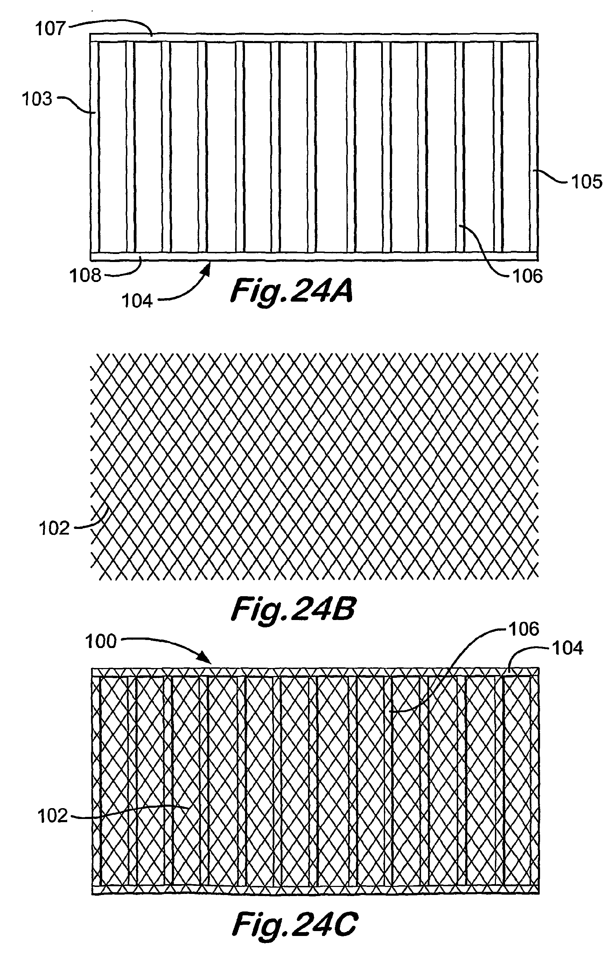

Figure 24A is a top plan view of a frame of the screen assembly of Figure 24C;
Figure 24B is a top plan view of screening material of the screen assembly of Figure 24C;

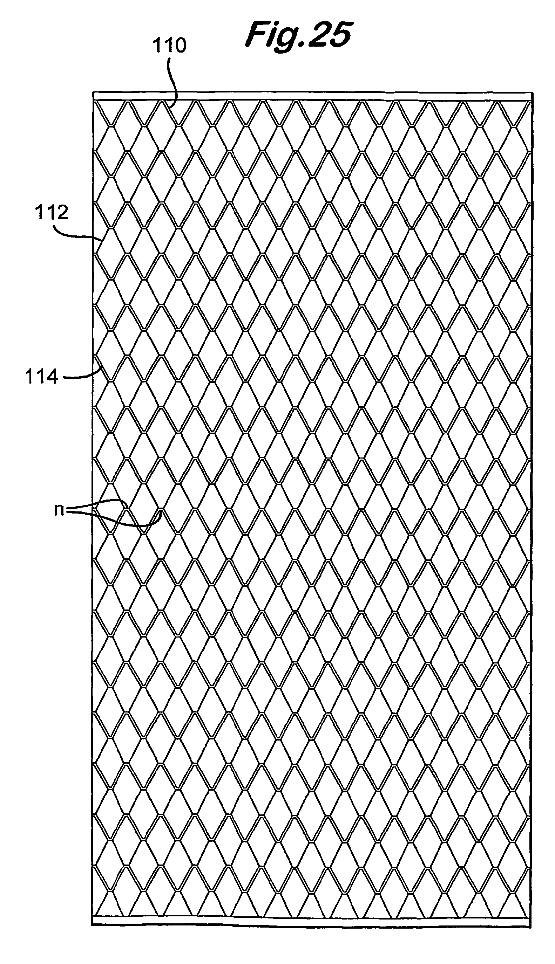

Figure 25 is a top view of a glue bead pattern for a screen assembly for a vibratory separator;

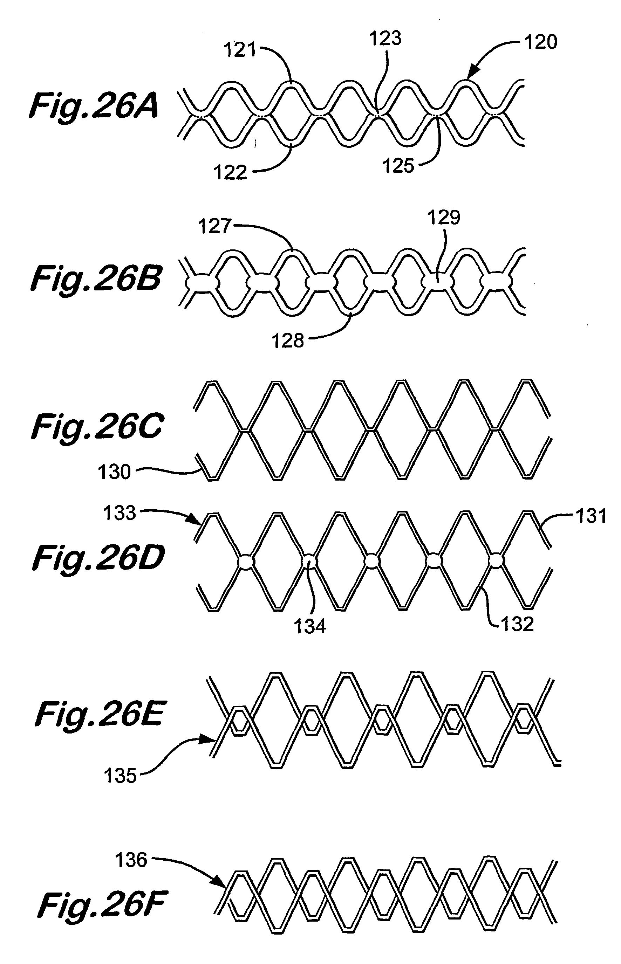

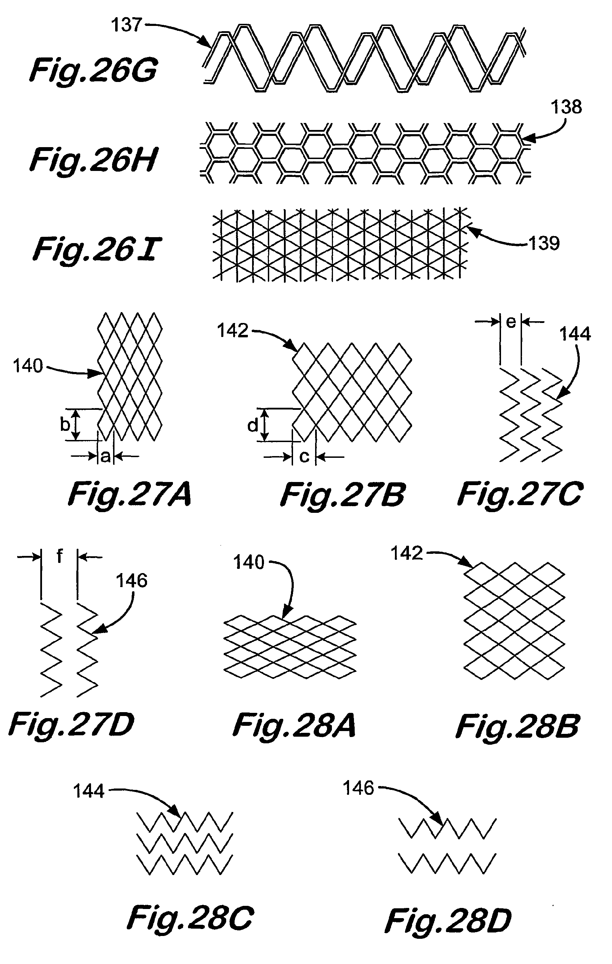

Figures 26A to 26I are top schematic views of glue patterns used in a method in accordance with the present invention;
Figures 27A to 27D are top schematic views of glue patterns used in a method in accordance with the present invention;
Figures 28A to 28D are top schematic views of glue patterns used in a method in accordance with the present invention;

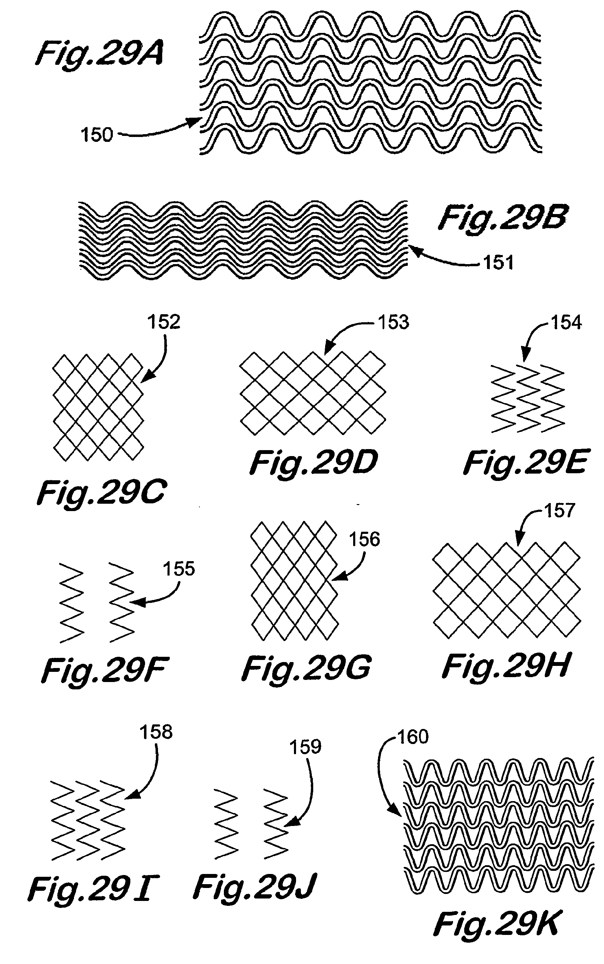

Figures 29A to 29K are top schematic views of glue patterns used in a method in accordance with the present invention;

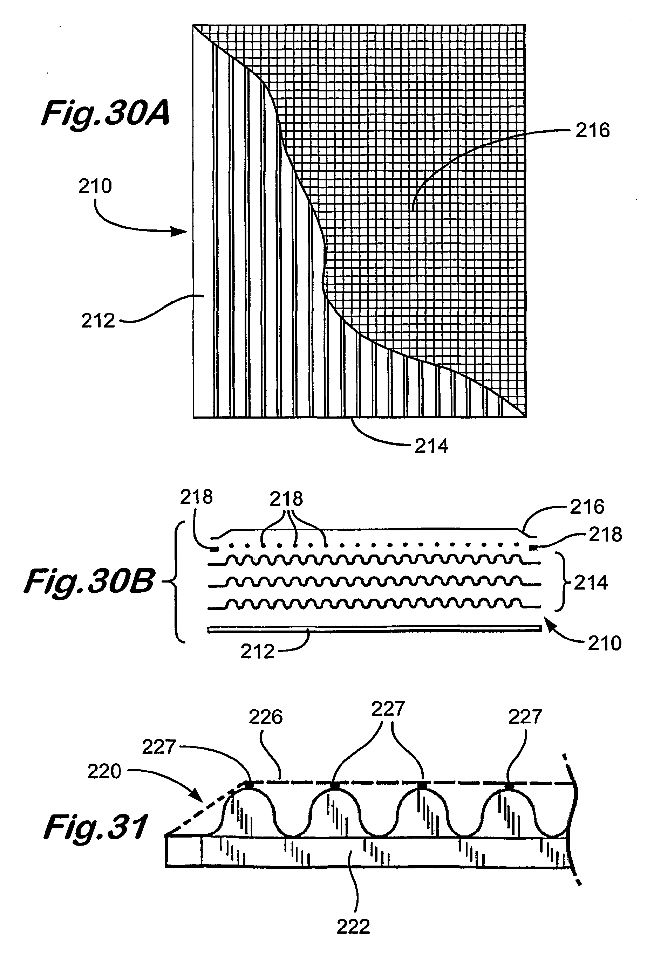

Figure 30A is a top view partially cut-away of a screen;
Figure 30B is an exploded end view of the screen of Figure 30A;
Figure 31 is an end view of a screen;

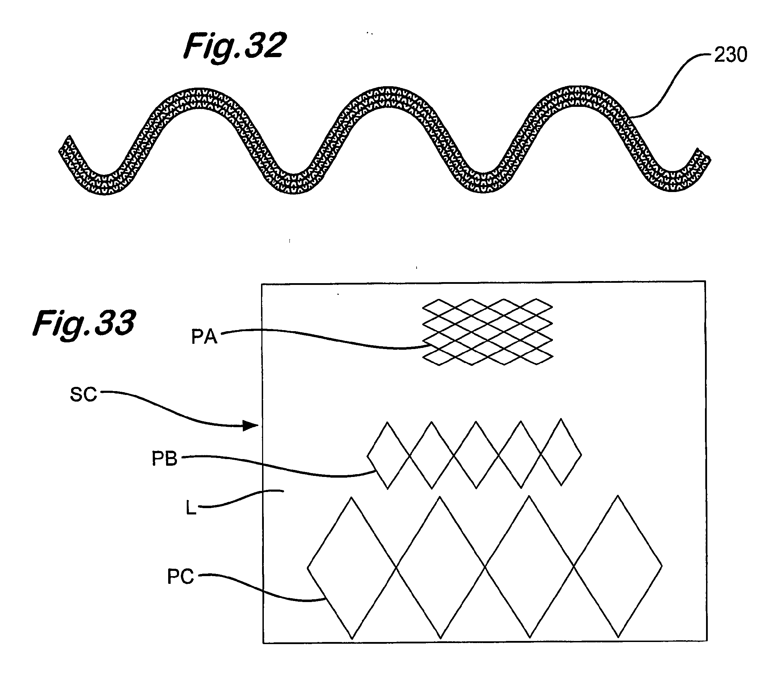

Figure 32 is a side cross-sectional view of screening material;
Figure 33 is a top schematic view of a screen assembly;

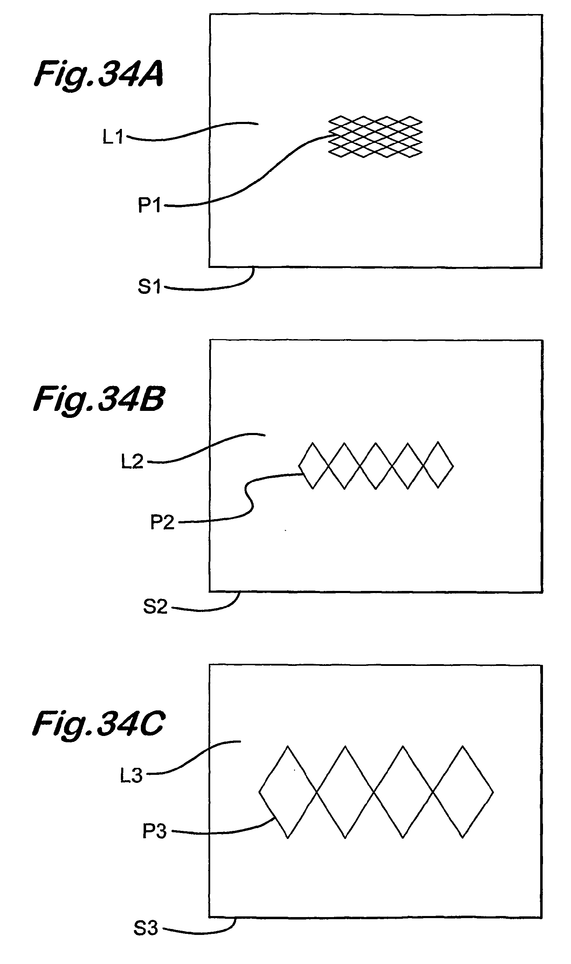

Figures 34A to 34C are top schematic views of screen assemblies;

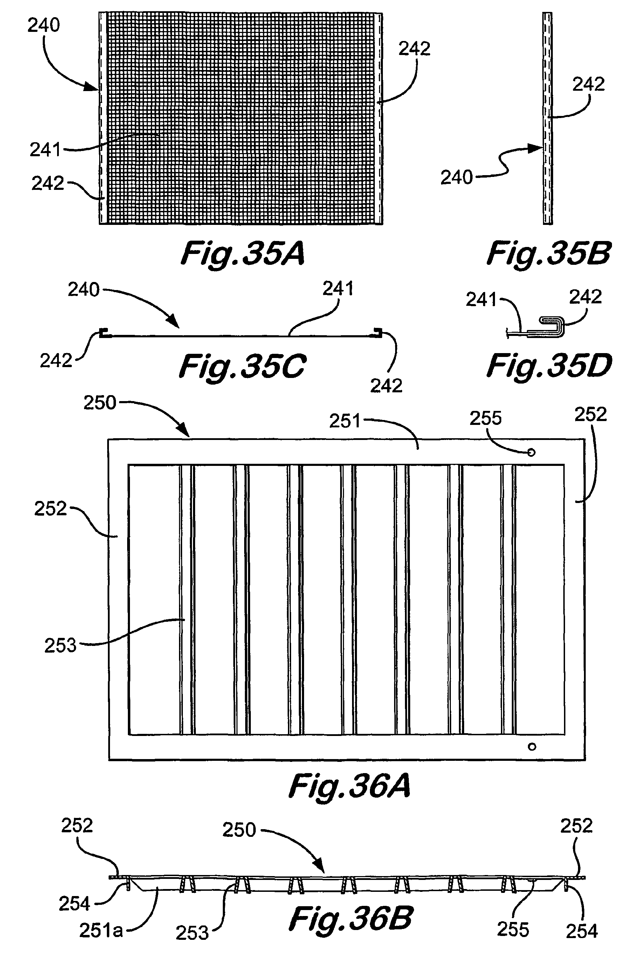

Figure 35A is a top schematic view of a screen assembly;
Figure 35B is a side view and Figure 35C is an end view of the screen assembly of Figure 35A;
Figure 35D is an enlargement of a hookstrip side of the screen assembly as shown in Figure 35C.
Figure 36A is a top plan view of a screen support;
Figure 36B is a cross-sectional view along a centre line spanning the length of the screen assembly of Figure 36A;

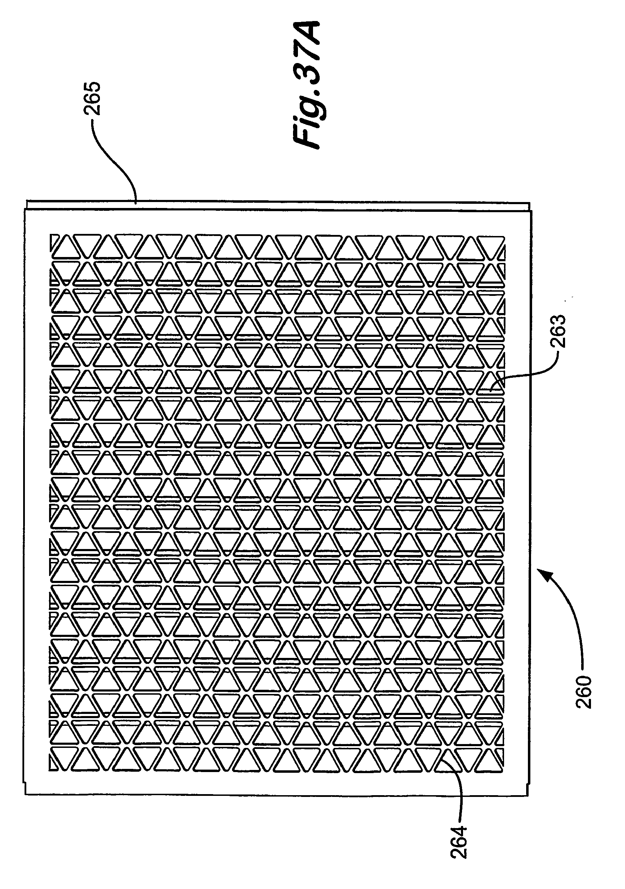

Figure 37A is a top view of a screen support;

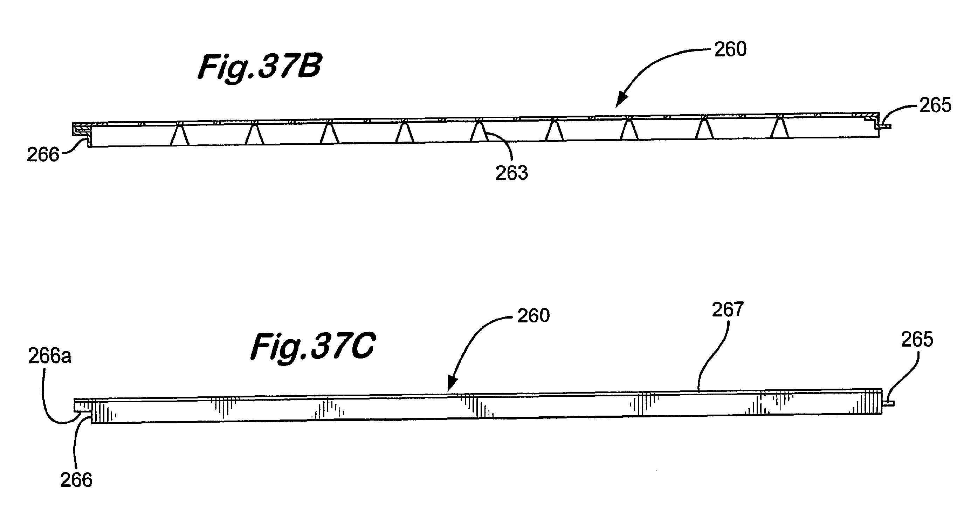

Figure 37B is a cross-sectional view taken along a centre line spanning the length of the screen assembly of Figure 37A;
Figure 37C is a side view of the screen assembly of Figure 37A;

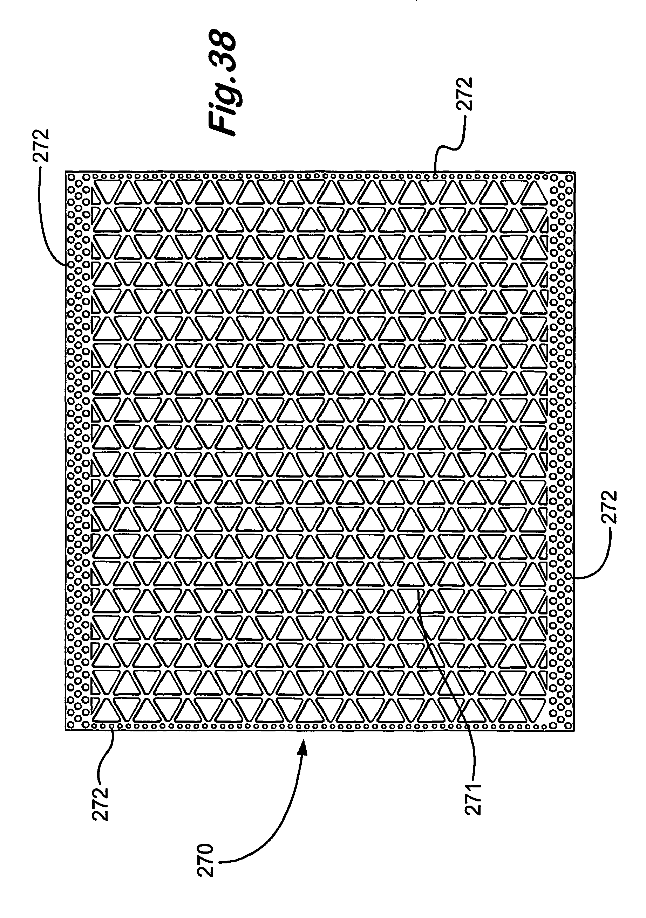

Figure 38 is a top view of a screen support;

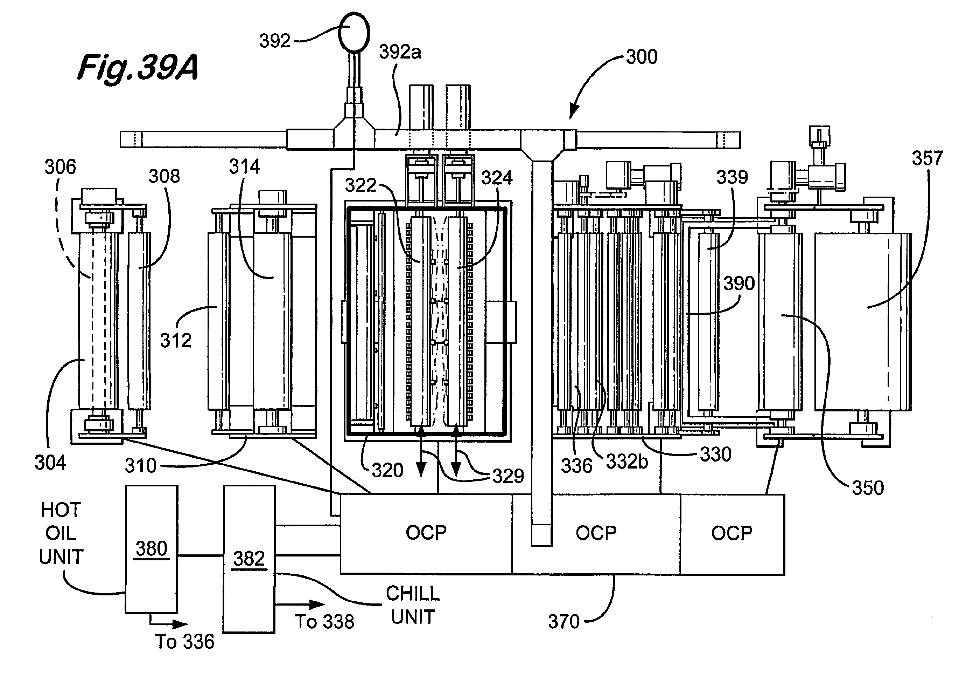

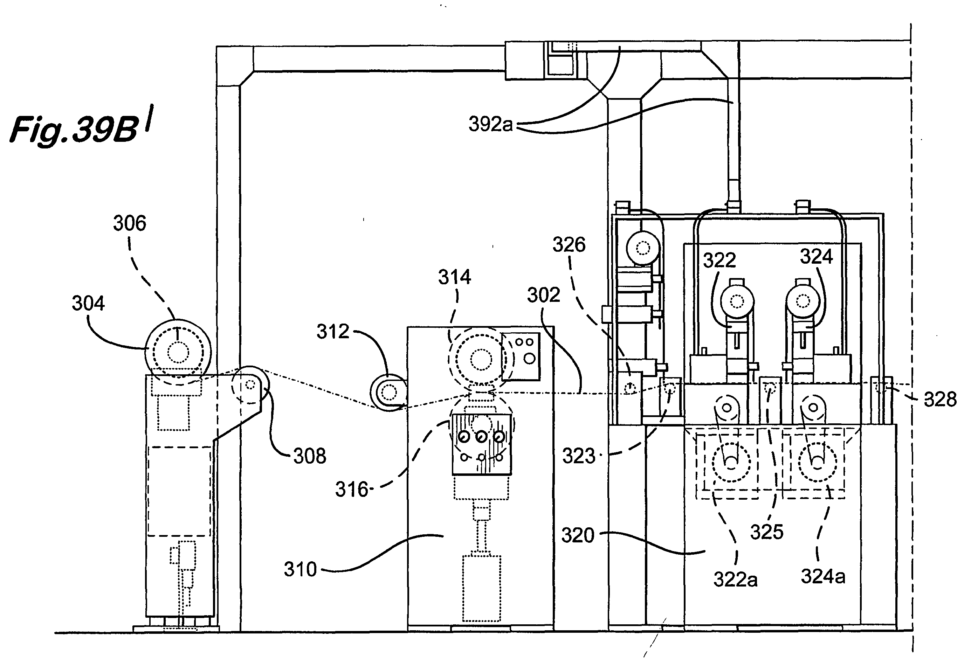

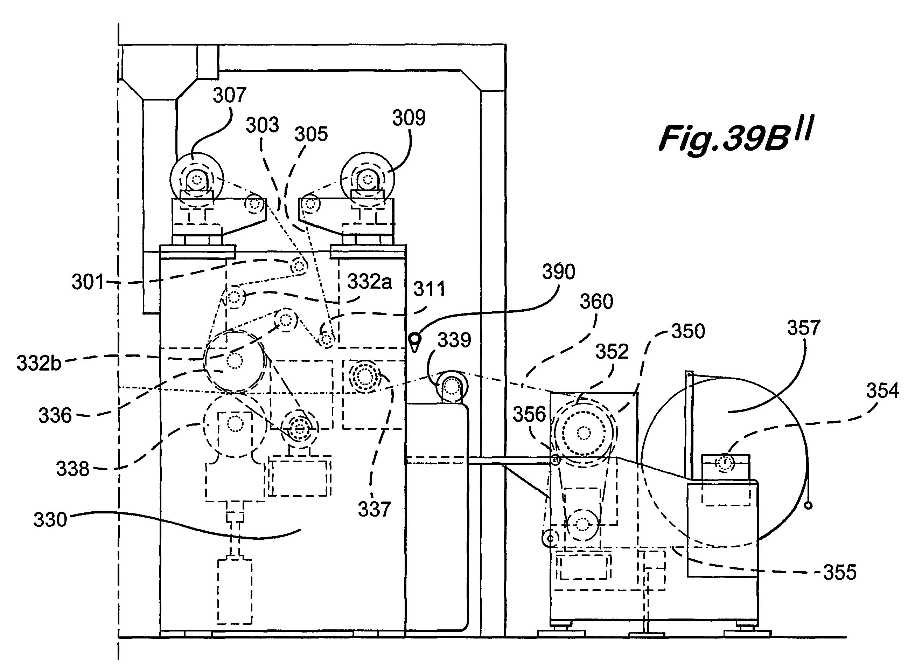

Figure 39A is a top view of apparatus in accordance with the present invention;
Figures 39B' and 39B" show a side view of the apparatus of Figure 39A.

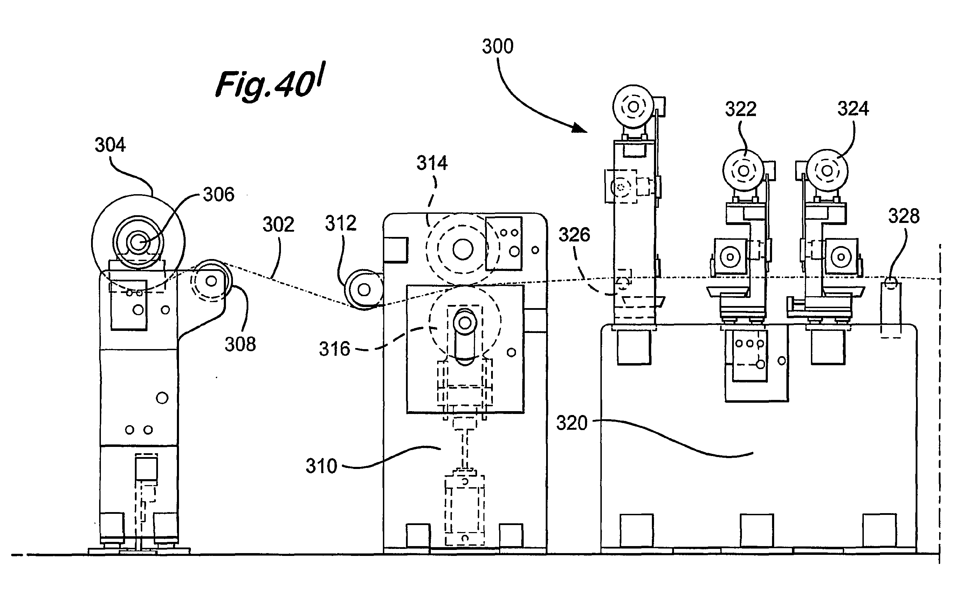

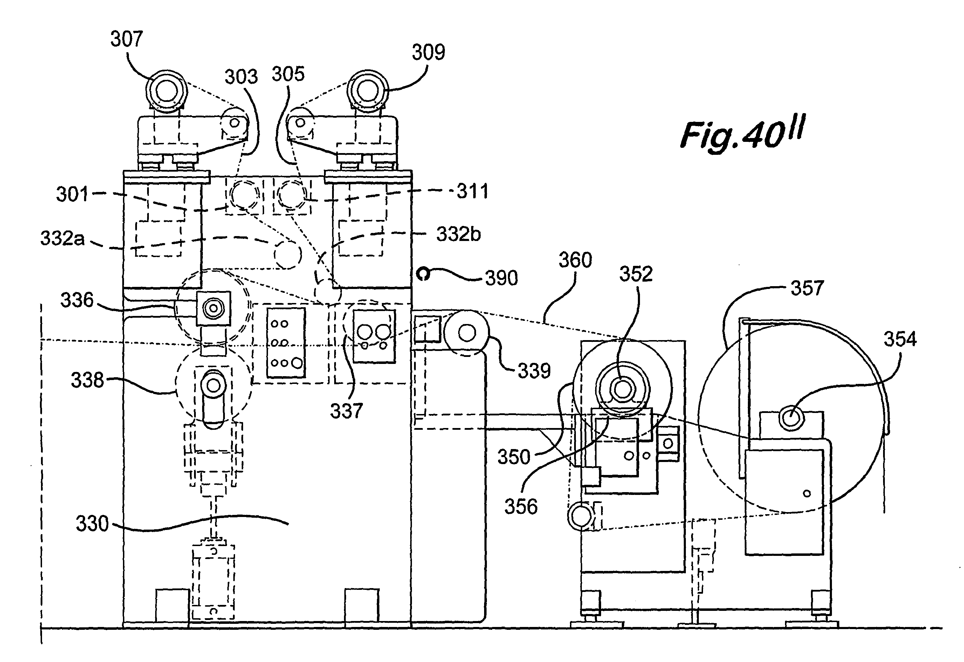

Figures 40' and 40" show a side view of apparatus in accordance with the present invention;

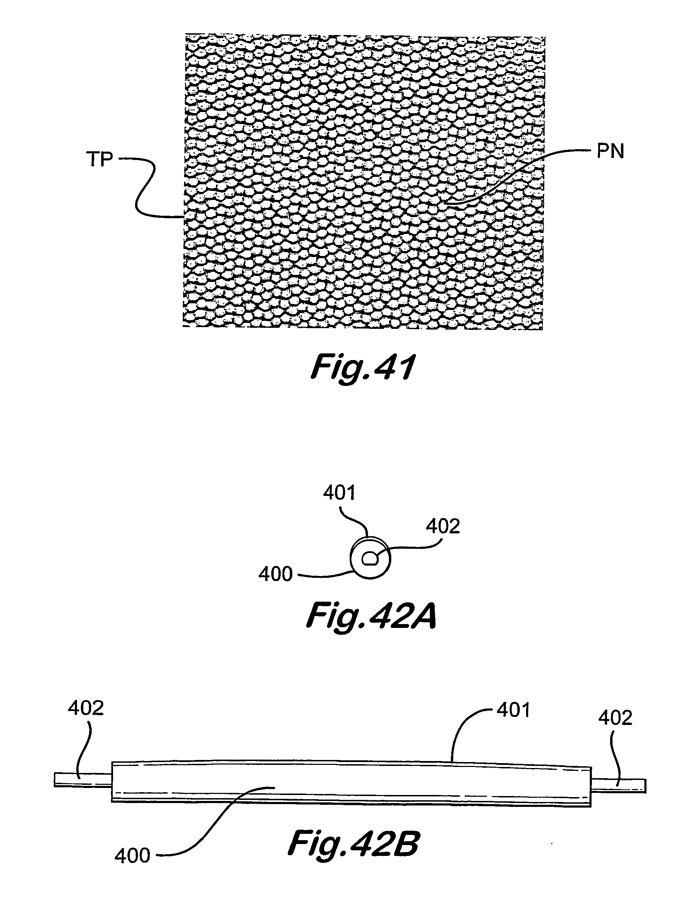

Figure 41 is a top view of textured PTFE tape used on rollers in accordance with the present invention; and
Figure 42A is an end view and Figure 42B is a side view of a roller used in the apparatus of Figure 39A.

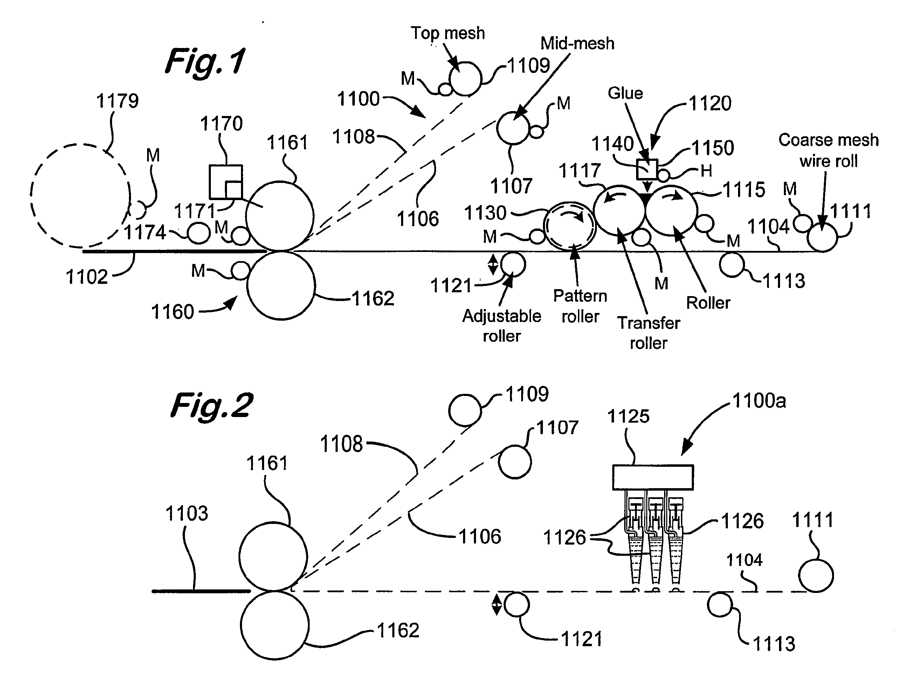

Figure 1 shows a system 1100 for making a screen 1102. As shown the system 1100 produces a screen 1102 which includes a lower coarse mesh or screen 1104, an intermediate mesh or screen 1106, and a top mesh or screen 1108. Any one of these meshes (or screens) 1104, 1106, 1108 may be omitted. Alternatively one or more additional mesh layers may be added.

The coarse mesh 1104 is initially wound on a roller 1111 from which it is unwound and passes over a rotating roller 1113. From the roller 1113 the coarse mesh moves to a position beneath a gluing station 1120 where glue in a pattern is applied on the coarse mesh 1104. In one aspect the coarse mesh is 19 mesh made of wire with a diameter of about 0.32cm (0.126 inches) . Of course any suitable mesh may be used.

A pattern roller 1130 applies a layer of glue in a desired pattern onto the coarse mesh 1104. Glue 1140 from a reservoir/manifold 1150 flows to a space forming a "pond" of glue between a first roller 1115 and a transfer roller 1117. Either or both of these rollers may be a heated roller. Alternatively, or in addition to heat from a heated roller or rollers, hot air from an optional heater H may be blown at the roller (s) and/or at the "pond", and/or it may heat the glue in the reservoir/manifold 1150. The transfer roller 1117 rotates counter-clockwise as viewed in Figure 1 and the first roller 1115 rotates clockwise; thus a film of glue is deposited on the outer surface of the transfer roller 1117 which film, in turn, contacts parts of a pattern in or on an outer surface of the pattern roller 1130 which rotates clockwise as viewed in Figure 1. The film on the pattern parts of the pattern roller 1130 is applied in the pattern onto the coarse mesh 1104 moving beneath the pattern roller 1130. In another aspect, glue is applied on top of a combination of two, three, or more meshes prior to entering between the rollers 1161 (rather than on top of the coarse mesh when it comes off the roll 1111). In another aspect, the glue is applied only to the mesh from either the roll 1109 or the roll 1107.

An adjustable roller 1121, whose tension against the mesh is adjustable by moving the roller up/down, supports the coarse mesh 1104 with glue thereon. The coarse mesh 1104 with glue thereon in a desired pattern determined by the pattern on the pattern roller 1130 advances to a pressing station 1160. The intermediate mesh 1106 is fed between rollers 1161 and 1162 of the pressing station 1160 from a roll 1107 as is the top mesh 1108 from a roll 1109.

Between the rollers 1161, 1162, the three meshes are pressed together and the glue is pressed between all three meshes to bond them together. Optionally, coolant fluid from a coolant reservoir 1170 is pumped with a pump 1171 through one or both of the rollers 1161, 1162 to cool the mesh combination passing between the rollers 1161, 1162. The finished screen 1102 (including all three meshes and glue) exit from between the rollers 1161, 1162. Optionally, a fan or fans and/or air movers or other cooling device(s) 1174 may be used to cool the screen 1102.

The various meshes for the screen 1102 may be fed through the system 1100 by hand and the finished screen 1102 may be pulled by hand from between the rollers 1161, 1162 and/or one or more of the rollers in the system may be a driven roller, rotated by a motor appropriately connected to the roller for rotating it with desired speed and torque (for example, but not limited to, motors M driving rollers 1161, 62). A suitable gearing system may be used interconnecting the motor and roller. In certain aspects one or more of the rolls and/or roller(s) are drive rolls and/or rollers which are rotated so that the mesh is moved through the system at a speed of between 6.1 and 18.3 metres per minute (twenty and sixty feet per minute). In other particular aspects, the speed is about 3.05 metres per second (ten feet per minute). Any or all of the rolls and/or rollers may be coated with polytetrafluorethylene and/or plastic ceramic, or cermet material. By adjusting roll and/or roller rotation speed, e.g. with suitable brake and/or drag apparatus, tension can be maintained on the mesh or meshes to keep it or them sufficiently taut while moving through the system. Motor Systems M represent (schematically) rotating systems for the rolls and/or rollers. Any, some, or all of the systems M may be omitted.

Optionally, the finished screen 1102 may be wound onto a drum or roller 1179.

Figure 2 shows a system 1100a like the system 1100 of Figure 1 with like parts indicated by like reference numerals in the one thousand one hundred series. The system 1100a does not have the gluing station 1120; but has a gluing apparatus 1120 for applying a desired pattern of glue to the coarse mesh 1104 that includes a glue reservoir/manifold 1125 from which glue is supplied to a plurality of glue nozzles 1126 (three shown). A sufficient number of nozzles are used sufficiently spaced-apart and positioned to create a desired glue pattern on the coarse mesh 1104. The resulting screen 1102 is like the screen 1102 and optional parts of the system 1100 may be used in the system 1100a. Other features of the system of Figure 2 may be included in the system 1100a.

In other embodiments, a fine mesh is unwound from the roll 111 and fine, finer, or coarse mesh or meshes are unwound from the rolls 1107 and 1109.

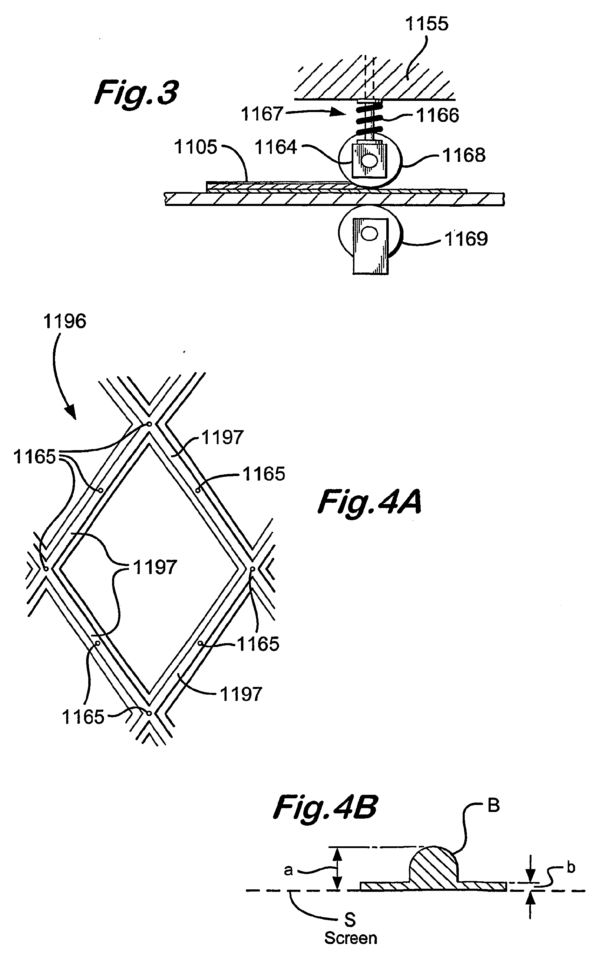

Figure 3 shows one embodiment for a pressing station 1167, like the pressing station 1160, with rollers 1168 and 1169. A spring 1166 biased between a support member 1155 and a roller shaft mount 1164 yieldingly urges the roller 1168 against a multi-mesh combination 1105.

The meshes 1104, 1106, and 1108 or 1104, 1106 and 1108 may be any mesh or screen disclosed herein. The glue 1140 may be any suitable glue, including, but not limited to, polyethylene glues and hot melt glues at a suitable temperature for flowing to and from a reservoir/manifold and onto a mesh, for example, but not limited to at about 121°C (250°F), between 121°C (250°F) and 204°C (400°F), or at other suitable temperatures for the particular glue being used.

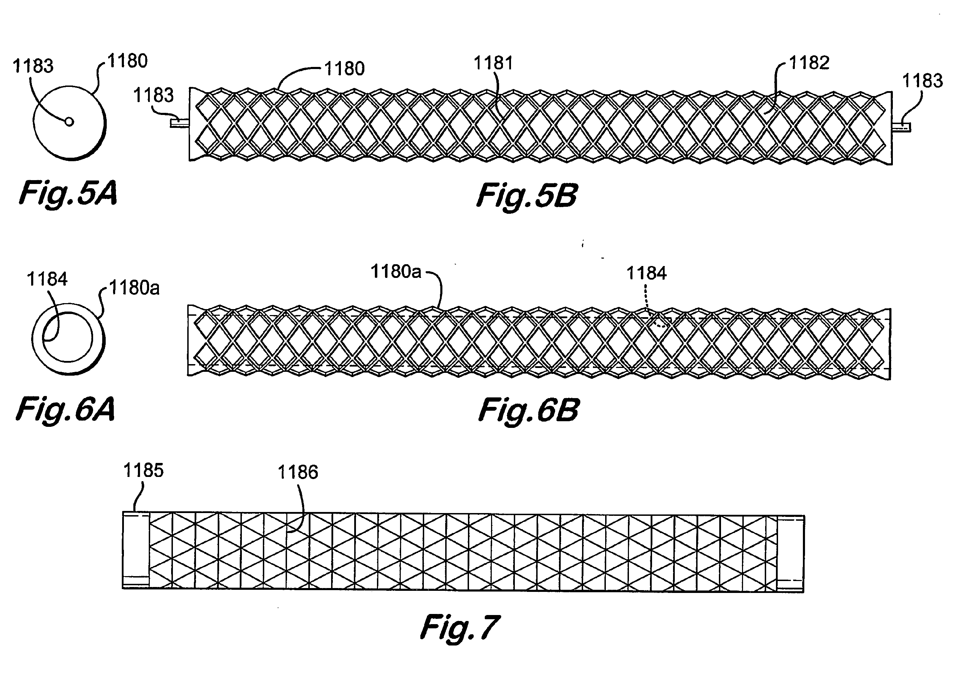

Figures 5A and 5B show a pattern roller 1180 useful as the pattern roller 1130 of the system 1100 in Figure 1. Raised portions 1181 on an exterior surface 1182 of the pattern roller 1180 form the desired pattern for applying glue to a mesh. The roller 1180 is solid with end shafts 1183 for mounting to suitable supports for rotation. Any pattern roller disclosed herein may be solid with end shafts like the end shafts 1183. Alternatively, recesses, holes, or indentations in one or both ends of the roller may be used to mount the roller to an appropriate shaft, mount, or support. Any of the pattern rollers disclosed herein, and any other roller used in systems disclosed herein, including, but not limited to systems as in Figures 1 to 3, may be coated with polytetrafluoroethylene.

Figures 6A and 6B show a roller 1180a like the roller 1180, but with a bore 1184 through the roller from one end to the other. Such a bored roller or "sleeve" may be installed on a common shaft or roller positioned as is the pattern roller 1130 in Figure 1. With a plurality of such sleeves with different patterns thereon, changing the system to produce a different glue pattern is greatly facilitated. Also, a worn or degraded sleeve is easily removed and replaced. Such sleeves also facilitate clean-up of the system.

The roller 1180 (and any roller disclosed herein) may include only the raised portions 1181 with no body or structure therebeneath nor between pattern components so that the portions 1181 and ends of the roller not only define a pattern but also form a perforated tube or sleeve. Such a tube or sleeve may be made from a piece of solid stock by machining and/or laser cutting. Any pattern for a roller described herein may be formed by grooves or recesses in a roller surface rather than by raised portions on a roller surface.

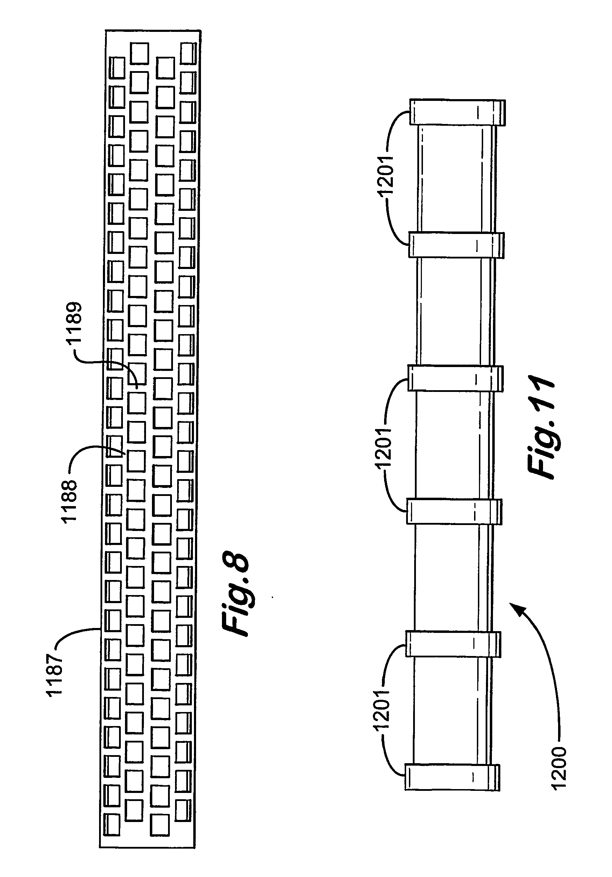

Figures 7 and 8 present pattern rollers with patterns or raised portions different from that of the patterns of the rollers of Figures 5B and 6B. The rollers of Figures 7 and 8 may have any of the options of the rollers of Figures 5B and 6B (including, but not limited to end shafts 1183 and bore 1184, or a perforated tube structure). A roller 1185 in Figure 7 has raised lines 1186 that define a pattern across the roller. A roller 1187 in Figure 8 has raised portions 1188 and 1189 that define a pattern across the roller.

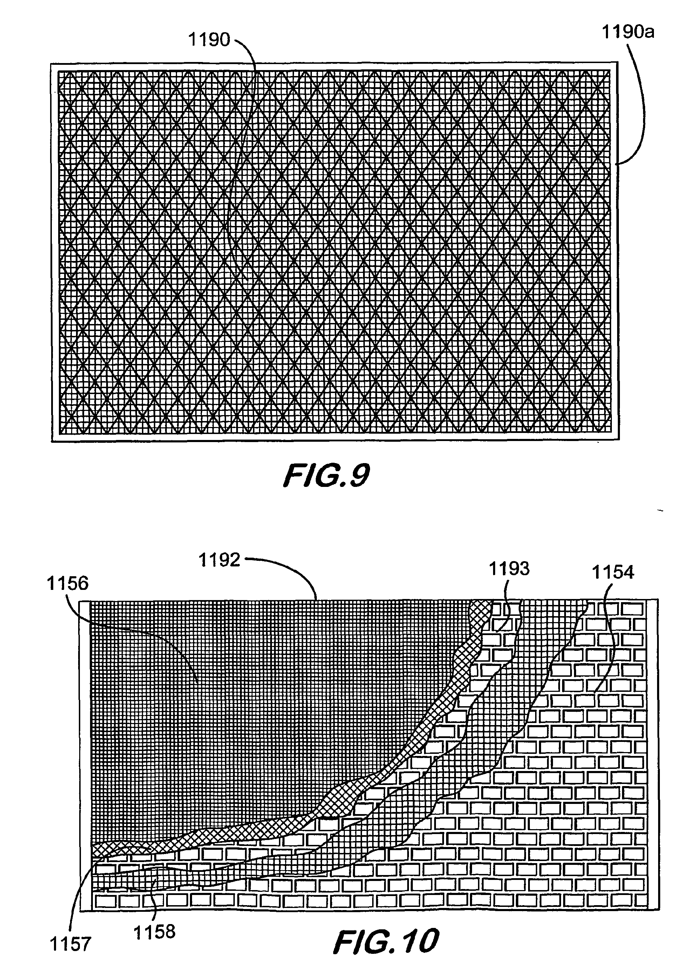

Figure 9 shows a screen 1190 produced with a system like the system 1100 of Figure 1, using a roller like the roller 1185 of Figure 7. Figure 10 shows a screen 1192 with a glue layer 1193 produced with a system like the system 1100 of Figure 1 using a roller like the roller 1187 of Figure 8. The screen 1192 is like the screens disclosed in U.S. Patent 4,575,421, but made with a system disclosed herein and by a method disclosed herein. The screen 1192 has three layers of mesh or screening material 1156, 1157 and 1158 and a lower perforated plate 1154. Any of the layers of mesh may be omitted and the glue 1193 may be applied on top of any of the layers. In one aspect the plate 1154 is omitted. In one aspect the plate 1154 is deleted and any other support is used. The screen 1190 is like a screen disclosed in U.S. Patents Des. 366,040 and U.S. 5,971,159.

An optional frame 1190a is used around the screen 1190.

Figure 4A shows an enlargement of part of a pattern roller 1196 which is similar to the roller 1180 of Figure 5B, but which has valleys, recesses or grooves 1197 in raised portions 1198 of the roller. Glue is received within the grooves 1197 so that a relatively higher or thicker level or bead of glue is applied to a mesh by the roller as compared to the layer or film of glue applied by a roller like the roller 1180. Any raised portion of any roller disclosed herein may include such a valley recess, or groove to increase the amount of glue applied on a mesh. In one aspect the grooves 1197 are between about 0.8mm (one-thirtysecond inch) to about 1.6mm (one-sixteenth inch) deep and in one particular aspect are about 1.6mm (one-sixteenth of an inch) deep. Viewed on end in cross-section the grooves may be v or U shaped, square-shaped, trapezoidal, or semicircular. Optionally the roller 1196 has a bore through it (like the bore 1184 of Figure 6B) and holes are provided through the roller so that the roller's interior is in fluid communication with the grooves via the holes and glue can be flowed or pumped from the roller interior to the grooves to provide the glue for the pattern to be applied to the mesh. Alternatively, in embodiments in which the grooves are not used, holes are provided through the roller through the raised portions of a patterned surface. Figure 4B shows a cross-section of one glue bead's B profile applied to a screen S with a pattern roller having grooves in raised portions of the pattern. The distance "a" is, in this embodiment, about 0.16cm (one-sixteenth of an inch). Preferably the distance "b" is as thin as possible. It is envisaged that partial grooves or recesses in only a portion of the raised portions of a pattern rollers surface, e.g., but not limited to, only to the outer edges or only to the center, only to the edges and center, or only to certain spaced-apart portions on the roller to create a series of strips on the screen.

Figure 11 shows a pattern roller 1200 which has raised pattern areas 1201 for forming a series of strips of glue on a screen or mesh or combination of layers thereof, including, but not limited to, a series of strips like the strips shown above. One may use an appropriately configured pattern roller to form any series of strips (like any series of strips disclosed herein for a screen or panel) on a screen or mesh with glue as described above. The areas or parts of them may have grooves around their entire surface (grooves or recesses as described above) or in part of the surfaces. Such a roller with or without grooves may also have holes as described above for introducing glue from the interior of the roller to the grooves and/or to the raised areas. By using a roller like the roller 100 with only the two outer raised portions 101, two spaced-apart sides can be created on screen or mesh. By turning a piece of such screen or mesh ninety degrees and feeding it again through a gluing system two additional spaced-apart sides are created so that all four sides of the screen or mesh are glued.

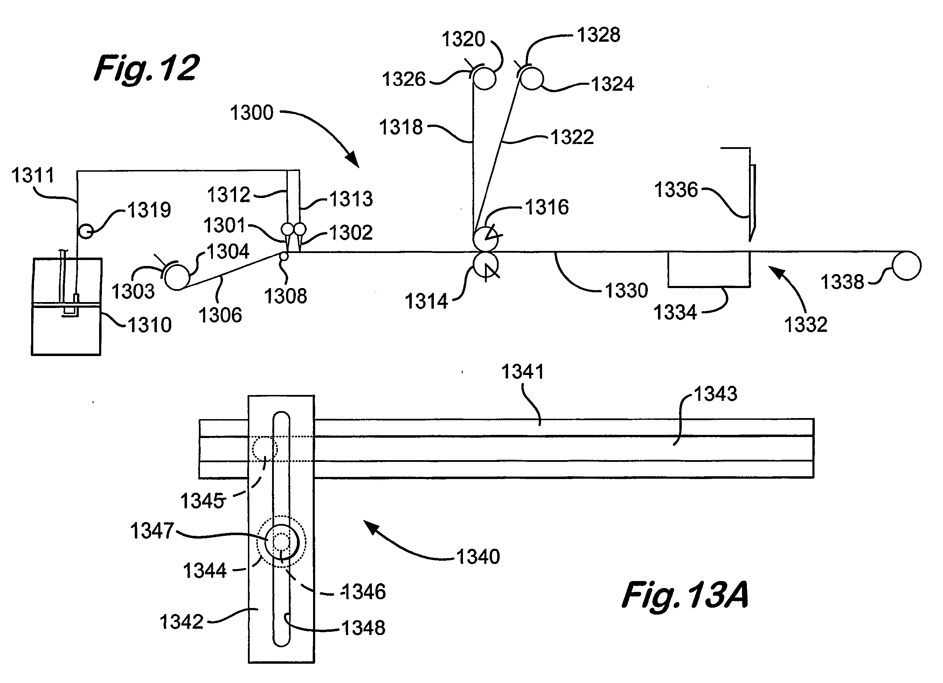

Referring to Figure 12, there is shown schematically, a system 1300 for applying glue in a desired pattern to a screen or screens (or mesh or meshes) and can be used to produce any screen disclosed herein or in any other of our PCT Publications, that employs glue or adhesive between two or more layers of screen(s) and/or mesh(es).

Hot glue for application to screen(s) or mesh(es) or combination thereof is supplied to nozzles 1301, 1302 from a glue apparatus 1310 through lines 1311, 1312, and 1313. Either of the nozzles may be omitted; or, more than two nozzles may be used. The line 1311 may be a heated line or a heated hose heated by optional heater apparatus 1319. Any suitable known glue system may be used, including but not limited to, hot glue systems which heat glue and then pump it to a flow line. In one particular aspect BulkMeter Applicators Model 5530, 5540, or 5506 commercially available from the Nordson Corporation of Amherst, Ohio may be used in systems disclosed herein (for example, for the apparatus 1310 in the system of Figure 1).

From a rotating roll 1304 a sheet of screen or mesh 1306 is unwound from the roll 1304 and moved over an idler roller 1308 to a position beneath the nozzles 1301, 1302 (or only one of them when one of them is omitted). A brake 1303 provides tension on the screen or mesh 1306 as it is pulled from the roll 1304. In certain aspects a roll of woven wire (screen or mesh) between for example, 30m to 90m (100 to 300 feet) in length is rolled from the roll 1304.

The screen or mesh 1306 with a glue pattern deposited thereon (any glue disclosed herein) moves between a rotating stationary (with respect to vertical position) roller 1314 and rotating adjustable (with respect to vertical position) roller 1316. In certain aspects it is preferred that the rollers 1308, 1314 are as close together as possible. Any roller in the system or roll can be a "driven" roller or roll, for example, powered by a motor with appropriate gearing, shafts, interconnections, etc., to pull the woven wire (screen or mesh) from the roll 1304. In one particular aspect the roll 1338 is a driven roll that pulls the woven wire from the roll 1304. The driven roll 1304 (or other driven roll or roller) can be rotated continuously as glue is deposited on the screen or mesh; or it can be drivingly rotated at intervals so that a desired portion of a layer of wire mesh is positioned beneath the nozzle(s) for glue pattern deposition. Following application of the desired glue pattern to the portion of the layer, the roll is again activated to remove the portion with the glue pattern and to position a new un-treated portion beneath the nozzle(s).

A second screen or mesh sheet 1318 unwound from a rotating roll 1320 and, optionally, a third screen or mesh sheet 1322 unwound from a rotating roll 1324, are also fed between the rollers 1314, 1316 between which all the sheets are pressed together. Brakes 1326, 1328 provide tension as desired on the rolls 1320, 1324, respectively. Pressure on the combination of sheets may be adjusted by adjusting the vertical position of the adjustable roller 1316. One may make a screen with any desired number of layers, or sheets of screening material (screen and/or mesh), including, but not limited to a final screen product with one, two, three, four, five or more layers.

In certain aspects the adjustable roller 1316 is positioned so that the sheets moving between the rollers 1314 and 1316 are bound together and part of the sheets are encapsulated in glue of the glue pattern. Either or both of the rollers 1314, 1316 can be a driven roller, for example, driven with a motor, to pull the various sheets between the rollers from their respective rolls. The rollers may act as heat sinks removing heat from the glue and/or cooling fluid may be circulated through one or both rollers to cool the glue.

Optionally a screen and/or mesh combination 1330 exiting from between the rollers 1314, 1316 may be cut to length as desired with a shear apparatus 1332 including a support 1334 and a shear device 1336; or the combination 1330 may be wound onto a roll 1338.

In one particular aspect the sheet 1306 is a layer of relatively coarse wire mesh (and, in certain embodiments, may be any coarse wire mesh disclosed herein); the sheet 1318 is a layer of medium wire mesh (and may be any medium wire mesh, for example,, but not limited, between 20 mesh and 250 mesh disclosed herein); and the sheet 1322 is a layer of fine wire mesh (and may be any fine wire mesh disclosed herein).

Any suitable known movement mechanism may be used to move the nozzle or nozzles above a layer of screen or mesh. One movement mechanism 1340 is shown schematically in Figure 13A and includes a first bar 1341 at right angles to a second bar 1342 on which is movably mounted a glue nozzle 1344. The second bar 1342 has a finger 1345 that projects down into a guide channel 1343 of the first bar 1341. As the second bar 1342 moves with respect to the first bar 1341 the finger 1345 moves in the guide channel 1343 to guide the movement of the second bar 1342. The glue nozzle 1344 moves along the second bar 1342, for example, a shaft 1346 projecting down from a knob 1347 moves in an elongated opening 1348 to guide movement of the glue nozzle 1344 with respect to the second bar 1342. Appropriate movement of the second bar 1342 with respect to the first bar 1341 and simultaneously of the glue nozzle 1344 with respect to the second bar 1342 makes possible the application of a glue bead in a desired pattern on a screen or mesh below the nozzle 1344. One, two, three, four or more glue nozzles may be movably mounted on the second bar; or a plurality of glue nozzles each with its own movement mechanism may be used. Alternatively, and for any embodiment disclosed herein, the layer or layers of screening material may be moved below fixed nozzle(s) to produce a desired glue pattern thereon. For example a portion of a roll of mesh to have a glue pattern deposited thereon is placed on a movable and inextendable table or other suitable support with a nozzle or nozzles mounted thereabove.

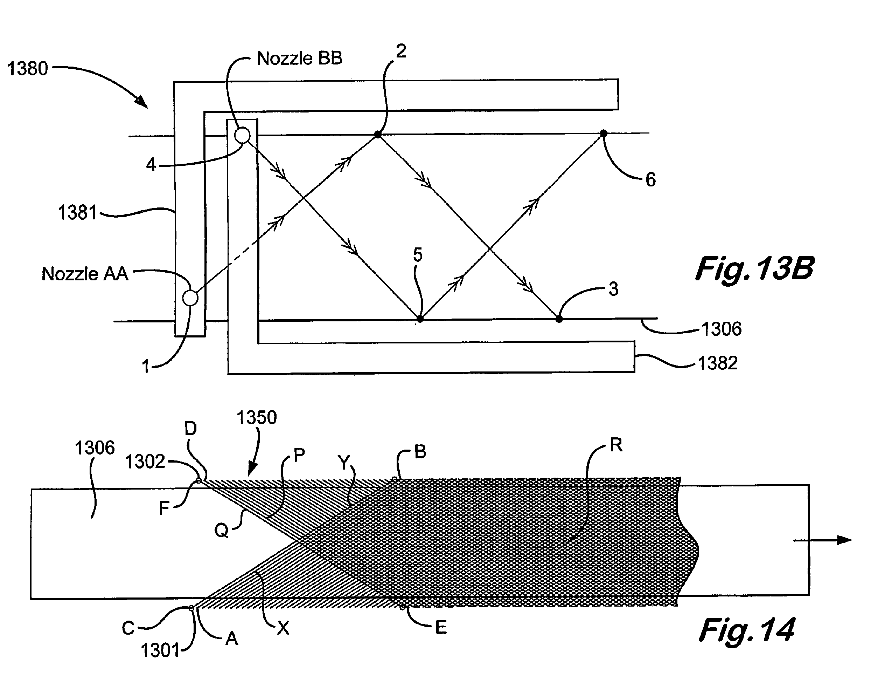

Figure 13B shows a system 1380 with two nozzle movement mechanisms 1381, 1382 (like the mechanism of Figure 13A) each with a nozzle AA and a nozzle BB respectively. In one method, nozzle AA is moved from the indicated position 1 to a new position 2, depositing a first glue bead on the screen or mesh 6 (like that in Figure 1) along a path from position 1a to position 2. The nozzle BB is moved (and may be moved before the nozzle AA is moved) from its initial position 4 to a new position 5, depositing as it moves a glue bead on the screen or mesh 6 along the path from position 4 to position 5. The screen or mesh 6 is then moved a predetermined increment (to the right or to the left as viewed in Figure 13B) and nozzle AA is moved back to position 1 (depositing a new glue bead on the screen or mesh as it moves, the new glue bead spaced-apart from the first glue bead) and, similarly, the nozzle BB moves back to position 4 depositing a corresponding glue bead. Alternatively, both nozzles may move on to a subsequent position (instead of moving back to positions 1 and 4, respectively); position 3 for nozzle AA and position 6 for nozzle BB. One may then move back to their initial positions following a movement or indexing of the screen or mesh, depositing a new glue bead when traversing the screen or mesh in the reverse direction (or not depositing a glue bead). The position 1 to 2 to 3 (nozzle AA) and position 4 to 5 to 6 (nozzle BB) movements can then be repeated. Alternatively only one of the nozzles may be used, moving to a second position and, optionally, on to a third position, and, optionally, then back to the second and then the first position. Although the nozzle paths shown in Figure 13B are substantially straight although either or both paths to be curved, zig zag, or wavy as viewed from above.

Typically a deposited glue bead has a width as viewed from above of between 0.12cm and 0.24cm (3/64ths and 3/32nds of an inch), and, in one particular aspect this width is about 0.16cm (1/16 inch). In certain aspects the distance of a glue nozzle above a layer of screen or mesh is between 0.95cm to 1.6cm (3/8 inch to 5/8 inch) and the nozzle (or nozzles) are moved at a rate of 1.3 to 2 metres per min (4 to 6 feet per minute) (or the layer of screen or mesh is moved below a stationary nozzle or nozzles at this rate).

Figure 14 shows a system 1350 like the system of Figure 12 in which the nozzles 1301, 1302 are initially positioned on opposite sides of a stationary portion of a layer of screen or mesh 1306. Nozzle 1 moves from a position A to a position B laying down a glue bead X and then reverses direction and moves from position B to position C laying down a glue bead Y. Simultaneously the nozzle 1302 moves from a position D to a position E laying down a glue bead P and then reverses direction and moves to a position F laying down a glue bead Q. As these movements of the nozzles are repeated a pattern R of glue is deposited on the screen or mesh 1306. When the nozzles have covered the desired portion of the layer of screen or mesh with the desired pattern, the layer is moved beneath the nozzles so that they are then positioned above a new layer portion to which the pattern is to be applied. Once the new portion is correctly positioned, the nozzles begin applying the glue pattern as before. Alternatively, the screen or mesh also moves below the nozzles as the glue is being dispensed.

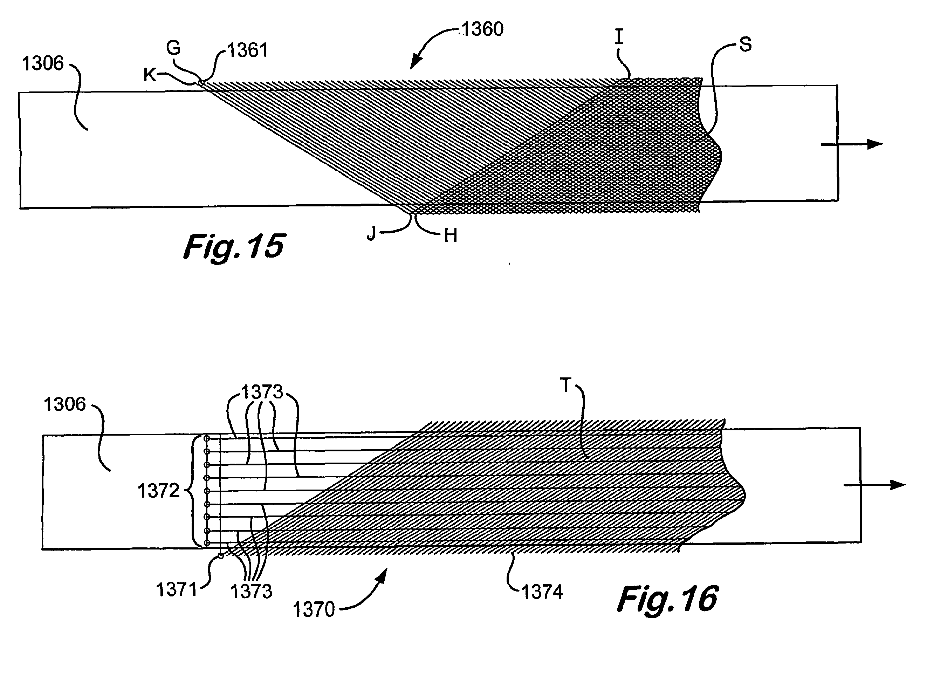

Figure 15 shows a system like the system of Figure 12 with a single glue nozzle 1361 that dispenses a glue bead onto the screen or mesh 1306 and moves from a position G, to a position H, then to a position I, to a position J, and then to a position K. By repeating this cycle of movement a pattern S of glue is applied to the screen or mesh 1306. When the desired pattern has been applied to a portion of the screen or mesh 1306, the glue flow is (optionally) shut-off, the screen or mesh 1306 is moved beneath the nozzle 1361 so that glue may be applied to another portion of the screen or mesh 1306. Alternatively, the layer of screen or mesh 1306 also is moved beneath the nozzle 13061 as glue is being applied thereto; or, in another aspect, following nozzle movement (for example, from points G to H to I) the screen or mesh is moved (for example, indexed a desired distance) below the nozzle and then the nozzle is moved in a reverse path (for example, from points I to J to K).

Figure 16 shows a system 1370 like the system of Figure 12 with a bank of glue nozzles 1372 and a glue nozzle 1371. The bank of nozzles 1372 applies a plurality of glue beads 1373 to the screen or mesh 1306. The nozzle 1371 moves above the screen or mesh 1306 to apply a plurality of glue beads 1374, producing a pattern T of glue on the screen or mesh 1306. Either the bank of nozzles is moved with respect to the layer of screen or mesh 1306, or the layer is moved below the bank of nozzles, or both. It is also possible to move the entire bank of nozzles at an angle to the direction of movement of the layer of screen or mesh 1306. Also, a bank of nozzles may be used on the side of the layer 1306 instead of a single nozzle like the nozzle 1371.

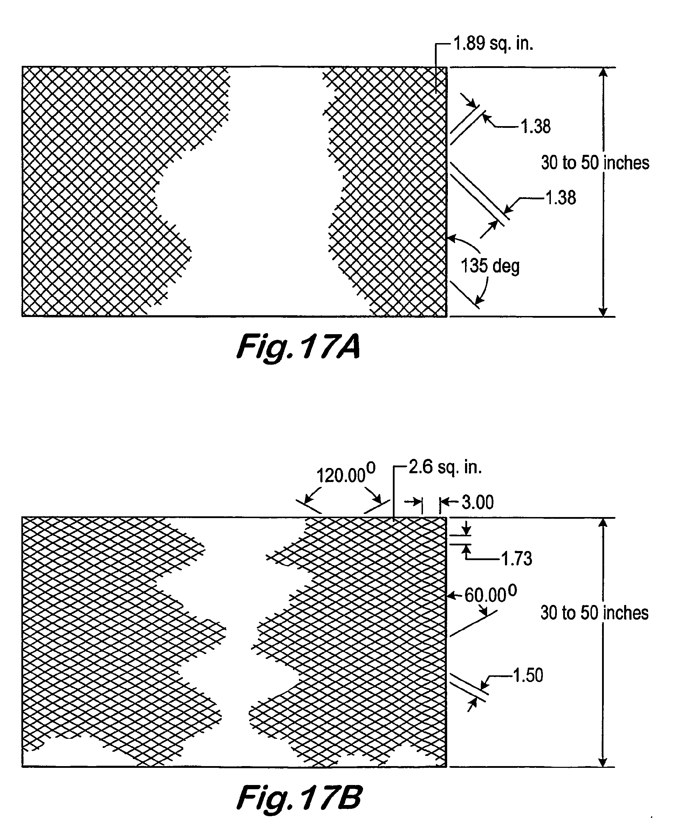

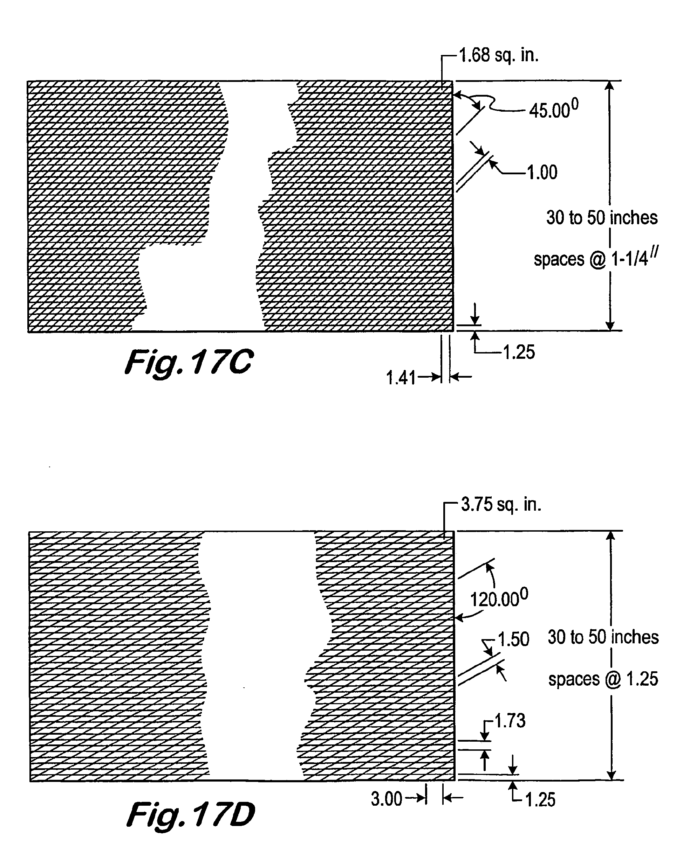

Figures 17A to 17D show possible glue patterns that may be applied by systems in accordance with the present invention (including, but not limited to, systems as in Figure 12, Figure 13B and Figures 14 - 15). These patterns can be achieved by appropriate control of rate of movement of the screen or mesh and/or by the rate and/or direction of travel of the nozzle(s). In Figures 17A to 17D, angle measurements are in degrees (either non or "deg"), length measurements are in inches ("inches" or "in" or a number, for example, Figure 17A "1.38" is 1.38 inches) and area measurements ("sq. in.") are in square inches. It is also within the scope of this invention: to substitute any patterning roller described herein for any bank of nozzles (for example, but not limited to the bank of nozzles in the system 1770); to substitute any patterning roller described herein for any nozzle in any system in Figures 12 to 16; and to use a roller to deposit any glue bead deposited by any nozzle in any system in Figures 12 to 16.

As with other systems described herein, the cooling of hot glue deposited by a nozzle or nozzles can be effected by the use of one or more fans or coolers and/or by circulating cooling fluid through one or more rollers and/or rolls that contact and/or are adjacent hot glue.

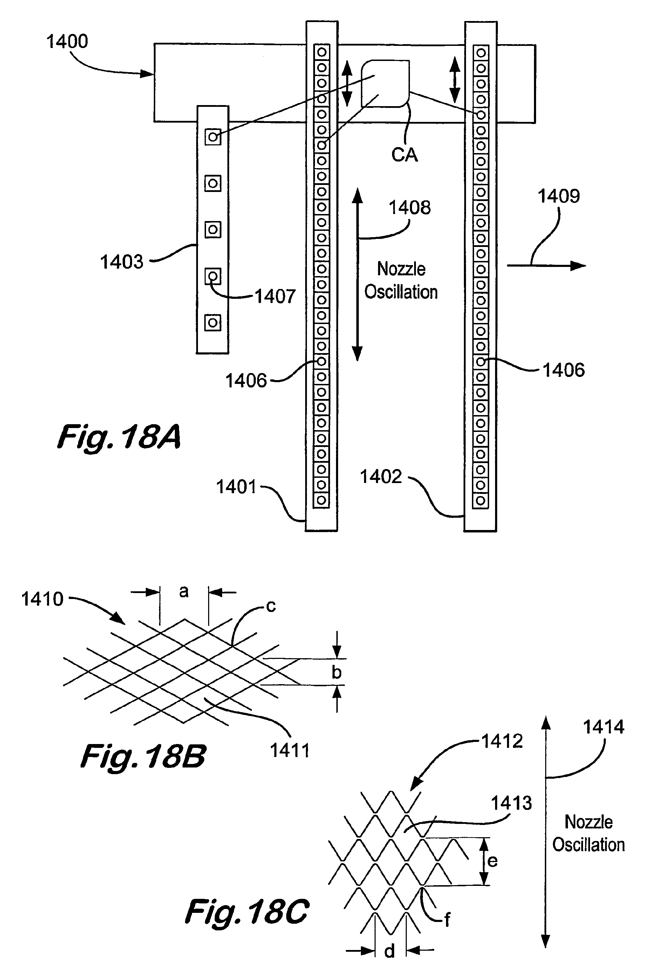

Figure 18A shows a glue applicator apparatus 1400 which has a main body with appropriate controls, flow lines, etc. as are well known in the art and two movable nozzle manifolds 1401 and 1402 that are movably connected to the apparatus 1400 with any known suitable manifold movement apparatus. A third nozzle manifold 1403 is secured immovably with respect to the apparatus 1400. In one particular aspect a scotch yoke cam arrangement CA may be used to move the manifolds 1401 and 1402 with respect to the main body.

As shown by the arrow 1408 in Figure 18A the manifolds 1401, 1402 oscillate at approximately a right angle to the main body, although it is within the scope of this invention for them to be positioned so that they oscillate at any desired angle with respect to the main body. An arrow 1409 indicates the direction of travel of screening material (including but not limited to any screening material disclosed herein) beneath the nozzles 1406 of the manifold 1401, nozzles 1405 of the manifold 1402, and nozzles 1407 of the manifold 1403. A conveyor, such as a conveyor belt or trolley may be used to convey the screens in the directional of travel 1409. Any number of nozzles may be used on any of the manifolds and any number of manifolds may be used, stationary or movable with respect to the main body. The manifold 1403 may be deleted as may be either or both of the manifolds 1401 and 1402. The position of the nozzles 1407 may be adjusted with respect to the manifold 1403 and moved as desired prior to glue application. Once positioned they are releasably fixed in place with any suitable fixing apparatus and/or fastener(s).

In certain particular aspects, an apparatus 1400 has movable manifolds whose oscillation rate is adjustable from 7 to 200 oscillations per minute and whose oscillation width is adjustable up to 4.5cm (1.75 inches). The screening material, in certain aspects, is movable beneath the glue nozzles at between 0.025 to 0.15m/s (5 and 30 feet per minute) and the nozzles of the movable manifolds are on 4.2cm (1.65 inch) centres (i.e., nozzle centres are 4.2cm (1.65 inches) apart from each other). In certain aspects the tips of the nozzles (on all manifolds) are adjustable up and down so that nozzle-tip-to-screening material distance is adjustable between 0.6cm (one-quarter inch) to 2.5cm (one inch). The spacing of the nozzles of the manifold 1403 can be adjusted as desired. Control apparatus CA can automatically or as desired provide glue flow to or shut-off glue flow to any nozzle or any number of selected nozzles, for example, but not limited to, every other nozzle. Also, either of the movable manifolds may be used in a stationary mode while the other oscillates. In certain particular aspects the glue beads for the screens of Figures 18B to 19D are as previously described herein or they are between 0.08 to 0.32 square cm (0.012 to 0.05 square inches) in cross-sectional area, when applied to screening material moving beneath the glue nozzles at between five to fifteen feet per minute or between 0.045 to 0.32 square cm (0.007 to 0.05 square inches) with material moving between 0.075 to 0.15m/s (fifteen to thirty feet per minute). Particular glues that may be used for the glue beads are known PUR glue and known EVA glue.

Figure 18B shows a glue bead pattern 1410 applied by an apparatus as in Figure 18A. The lines in Figure 18B indicate the centre of linear glue beads and any glue bead disclosed herein may be employed. The screen with such linear glue beads may be sheared by shearing down the length of the glue bead either manually with a shearing device, knife or scissors or with an appropriate shearing apparatus. The distance "a" is the distance between adjacent horizontal vertices (as viewed in Figure 18B) of the plurality of parallelograms 1411 and the distance "b" is the distance between adjacent vertical vertices (as viewed in Figure 18B) of the parallelograms 1411. Letter "c" indicates a radius of curvature for a curve portion indicating a change in glue bead direction. In one particular glue bead pattern in accordance with the present invention the distance "a" is about 7.4cm (2.90 inches); the distance "b" is about 4.2cm (1.65 inches); and "c" is 0.33cm (0.13 inches).

Figure 18C shows a glue bead pattern 1412 applied by an apparatus as in Figure 18A (or by one of the apparatuses previously discussed above). The lines in Figure 18C indicate the centre of linear glue beads (any glue bead disclosed herein may be employed for these beads). The distance "d" is the distance between adjacent horizontal vertices (as viewed in Figure 18C) of a plurality of parallelograms 1413 and the distance "e" is the distance between adjacent vertical vertices (as viewed in Figure 18C) of the parallelograms 1413. Letter "f" indicates a radius of curvature of a curve indicating a change in direction of a glue bead. In one particular glue bead pattern has the distance "d" is about 4.8cm (1.90 inches); the distance "e" is about 8.4cm (3.30 inches); and "f" is 0.33cm (0.13 inches). It is within the scope of certain embodiments of this invention for the radius of curvature (for example, dimension "c" or "f") to range between 0.025cm (0.01 inches) and 7.6cm (3 inches).

As with the arrow 1408, Figure 18A, the arrow 1414 in Figure 18C indicates the direction of movement of the movable nozzle manifolds to produce the pattern 1412 (and the pattern 1410, Figure 18B). With appropriate settings for the speed of movement of screening material beneath the manifolds of the apparatus 1400 and appropriate speed of movement of the movable manifolds a desired glue bead pattern may be produced.

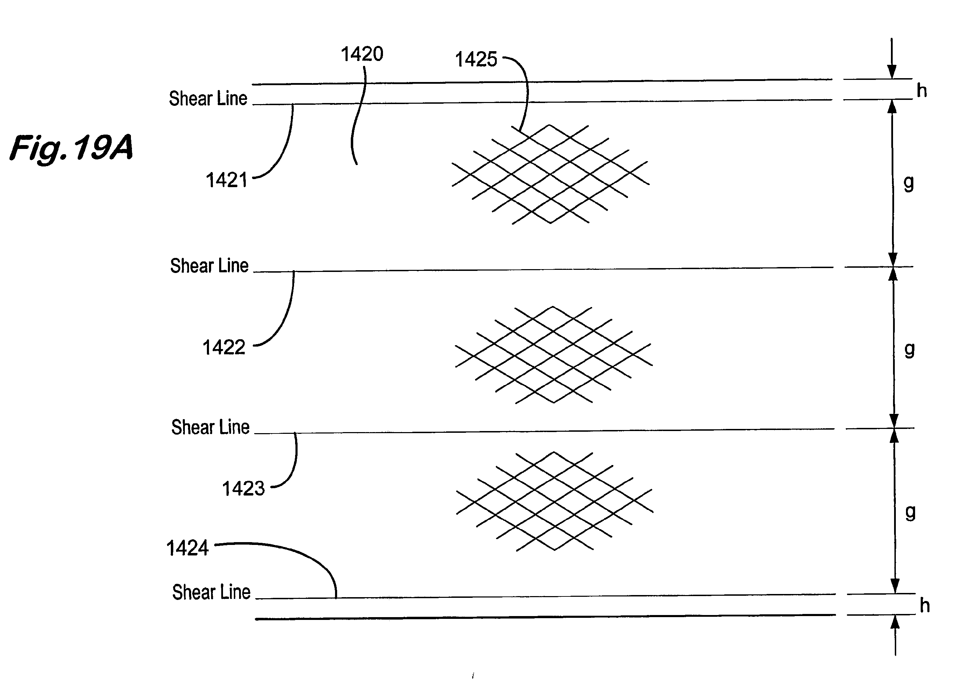

Figure 19A shows screening material 1420 to which has been applied a glue bead pattern 1425 using an apparatus in accordance with the present invention, including, but not limited to an apparatus like the apparatus 100 of Figure 18A. It is to be understood that any desirable glue bead pattern could be applied to the screening material 1420. Lines 1421, 1422, 1423, and 1424 indicate the centre line of linear a glue beads applied, for example, by a manifold like the manifold 1403, Figure 18A, with four glue nozzles (or a manifold with more than four nozzles, but with only four of them operative for this method). Alternatively, the glue beads whose centres are the lines 1421-1424 may be applied before or after the screening material 1420 is fed beneath the movable nozzles that produce the pattern 1425 (which is to be understood as extending across substantially all of the screening material 1420 although shown only partially on three sections thereof in Figure 19A).

The lines 1421-1424 are shear lines along which the screening material 1420 may be cut following glue pattern deposition thereby producing three sheets of glue-patterned screening material each of desired width "g". Thus three sheets are produced (of any desired length) which each has a glue bead along its spaced apart sides following shearing of the screening material along the lines 1421-1424. In one particular aspect the distance "g" is about 29.8cm (11.75 inches) and the distance "h" is about 3.5cm (1.38 inches).

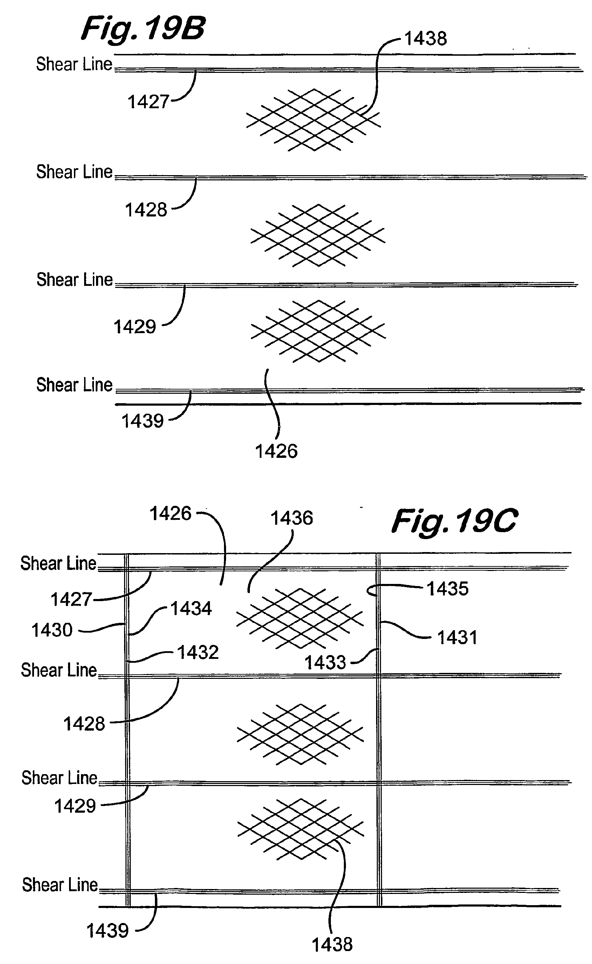

Figure 19B shows screening material 1426, like the screening material 1420, with entire glue beads 1427-1429, 1439 illustrated, each with a shear line down the glue bead. Figure 19C shows the screening material 1426 also with vertical (as viewed in Figure 2C) spaced-apart glue beads 1430, 1431 with shear lines 1432, 1433. With such beads 1430, 1431 screening material sections are produced with ends having a glue bead edge, for example as the ends 1434, 1435 of the section 1436. The screening material 1426 has a glue bead pattern 1438 which may be any suitable glue bead pattern and may be any glue pattern disclosed herein. The glue beads 1430, 1431 may be applied with any suitable apparatus as described above. Alternatively they may be applied manually. Any glue bead disclosed herein may be applied manually to a substrate or to screening material.

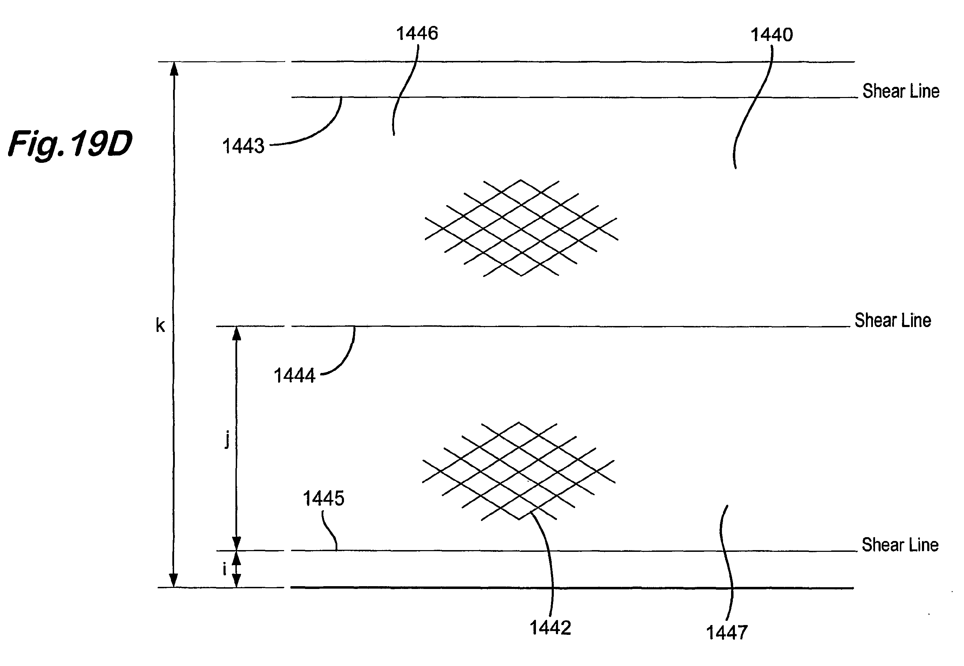

Although Figures 19A to 19C illustrate a method in which three screen sub-sections extend across the width of the initial sheet of screening material, although one may produce one, two, four, five, or more screens from one initial width of screening material. Figure 19D illustrates screening material 1440 which has a glue pattern 1442 applied thereto. Three glue beads (not shown in their entirety) each have a shear line 1443, 1444, 1445. Upon shearing of the screening material 1440 along the shear lines 1443 to 1445, two screen sections 1446, 1447 will be produced. In one particular aspect the distance "i" is about 6.35cm (2.50 inches); the distance "j" about 41.9cm (16.50 inches); and the distance "k" about 97cm (38 inches). Any pattern may be used for the glue pattern 42. One may apply glue beads to form glued screen section ends as with the glue beads 1430, 1431 in Figure 19C.

Screening material and/or a substrate on which glue is to be deposited (either manually with a glue gun or other dispenser, or by automated glue application apparatuses as described herein) may be moved beneath such apparatus or dispenser at a movement rate between 0.0025m/s (6 inches per minute) and 0.25m/s (50 feet per minute). In certain other embodiments this rate is between 0.025m/s (5 feet per minute) and 0.15m/s (30 feet per minute) .

In other embodiments a glue pattern is applied to a substrate other than a screen or mesh or combination or multiple thereof. In certain embodiments the glue pattern on the substrate remains on the substrate and the glue/substrate combination is used with or on one or with, on, or between more than one layer of screen or mesh to form a screen assembly. In other embodiments the glue pattern, for example in a cured, semi-cured, or incompletely cured state, is separated from the substrate and applied between, to or on a layer or layers of screen and/or mesh to form a screen assembly. Such embodiments to employ any suitable glue, including but not limited to thermoplastic and/or thermosetting glues. Any suitable substrate may be employed, including but not limited to, paper, cardboard, kraft paper, wax paper, waxed cardboard, release liner material, and material from which glue is separable without deforming or destroying the glue and without adversely affecting a desired glue pattern.

In certain embodiments a sheet or piece of a glue/substrate combination or a glue pattern separated from a substrate is formed into a roll of material (with glue to the outside or glue to the inside when the substrate is included) which is then used in the formation of a screen assembly. A glue/substrate combination or separated glue pattern may be used to make a screen assembly in any known manner in which pressure and/or heat is applied to a combination of one or more of them with one or more layers of screen and/or mesh.

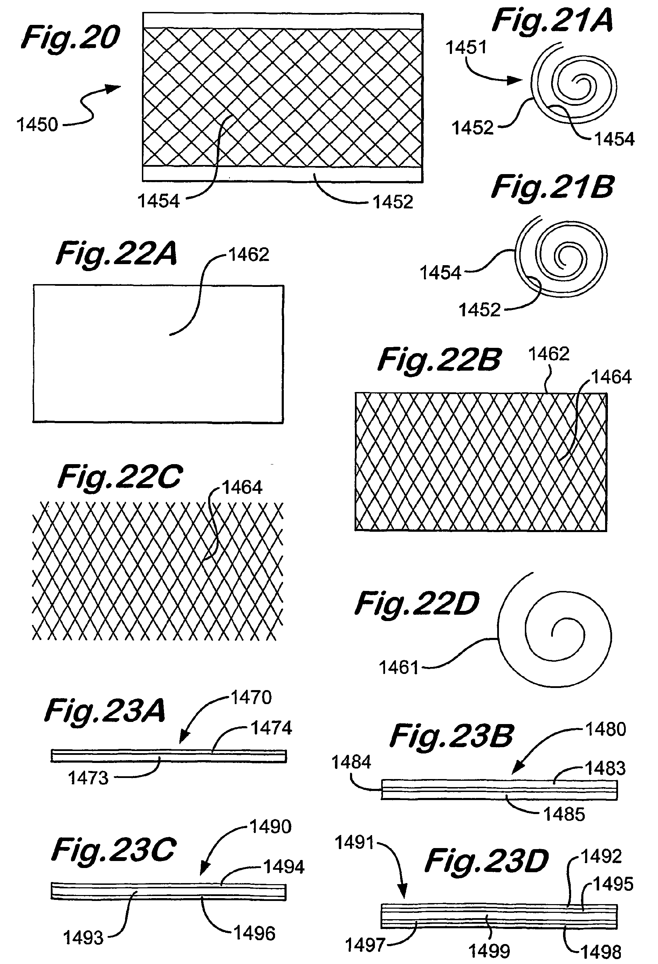

Figure 20 shows a glue/substrate combination 1450 with a paper substrate 1452 and a glue pattern 1454 deposited thereon (for example, by any apparatus and by any method disclosed herein, by hand, or by any suitable machine or apparatus; using any glue suitable for use in a screen assembly for a vibratory separator). Alternatively, the pattern may be any desired pattern including any pattern disclosed herein, with or without edges and/or with or without one or more shear lines of glue.

Figure 21A illustrates a roll 1451 of the glue/substrate combination 1450 of Figure 20. As shown the roll is rolled with the substrate on the roll's exterior and the glue pattern disposed internally of the roll; but the position of these components to be reversed (as is true of any roll of material herein), for example, as shown in Figure 21B. Such a roll (and any roll of material described herein) may be unrolled for subsequent use. In certain aspects, as needed, such a roll of material may be heated to facilitate its unrolling.

Figure 22A illustrates a piece of release liner material 1462 (or wax paper or waxed cardboard) to which a glue pattern is to be applied. Figure 22B shows a resulting glue pattern 1464 applied to the release liner material 1462. Figure 22C shows the resulting layer of glue pattern 1464 after it has been separated from the substrate of release liner material 1462. The layer of glue pattern 1462 may be used flat as shown in Figure 22C; or as shown in Figure 22D it can be rolled into a roll 1461 for further future use.

Figure 23A shows a screen assembly 1470 with a glue pattern 1474 that has been separated from a substrate to which it was previously applied. The glue pattern 1474 has been applied onto a layer (or layers) of screening material 1473. The glue pattern 1474 (any glue pattern disclosed herein) may be pressed onto and/or into the screening material 1473 and/or heat may be applied to the combination of glue pattern and screen layer to fuse and/or connect the two together and/or to impregnate the screening material 1473 with some or all of the glue pattern 1474. The screening material 1473 may be any screen, screens, mesh, or meshes, or any combination thereof. The glue pattern and screen layer(s) may be pressed together in any suitable manner; for example, but not limited to, between dual opposed pressing rollers, by a flat plate (heated or not) placed on top of the combination; and/or between the flat plates of a press apparatus.

Figure 23B shows a screen assembly 1480 which has a glue pattern layer 1484 (like the glue pattern 1474, Figure 23A or any of its alternative versions) between two screen layers 1483, 1485 (each like the screen layer 1473, Figure 23A or any of its alternative versions). Figure 23C illustrates a screen assembly 1490 with two glue pattern layers 1494, 1496 (each like the glue pattern layer 1474, Figure 23A, or any of its alternative embodiments). A screen layer 1493 (like the screen layer 1473, Figure 23A or any of its alternative embodiments) is disposed between the glue pattern layers 1494, 1496. The components of the screen assemblies of Figures 23B and 23C may be heat treated and/or pressure treated as are the components of the screen assembly 1470, Figure 23A, as described above.

Figure 23D shows a screen assembly with a screening material layer 1499 on either side of which are glue pattern layers 1495 and 1497. Each glue pattern layer has not been separated from a substrate 1492, 1498 respectively on which the glue pattern layers have been previously deposited. The screening material layer 1499 may be any screening material disclosed herein. The substrates 1492, 1498 may be any substrates disclosed herein. In one particular embodiment the substrates are suitable cardboard release material (for example, waxed) which serves as a protective cover or package (with ends appropriately folded over and/or sealed) for the resulting screen assembly. Such cardboard may be sized and of such a nature to withstand any heat treatment and/or pressure treatment to the glue/screening material combination.

Any screen assembly described herein that includes a glue pattern layer to include a substrate on which the glue pattern layer is formed. The substrate is subsequently removed from the resulting screen assembly by peeling it away, by burning, by chemical degradation (chemical applied with or without pressure) or by liquid (for example, water) blasting. In any embodiment of a screen assembly herein that employs a glue/substrate combination in the screen assembly, the substrate side or the glue pattern side may be on the exterior on either top or bottom (or both) of the screen assembly. The substrate may include multiple layers of similar or different material.

"Screening material" for any screen or screen assembly in Figures 18A to 23C may be any screening material disclosed herein or disclosed in any of our patents or patent applications and it may be corrugated following glue application. Such corrugation may be in the form of any corrugated screen disclosed in the prior art for use on vibratory separators or shale shakers.

Figure 24C shows a screen assembly 100 which has screening material 102 (Figure 24B) secured onto a tubular frame 104 (Figure 24A). In other aspects, the frame 104 is deleted. In other aspects the frame 104 is deleted and a hookstrip is connected to each of two spaced-apart sides of the screening material 102. The screening material is any multi-layer screen with two, three or more layers glued together as described herein. The screening material 102 and the tubular frame 104 are encapsulated with a powdered epoxy in a semi-cured state. The frame 104 and the screen material 102 are placed on a heated platen. The currently semi-cured powdered epoxy is heated to a flowable state (e.g. to 140°C (300°F) to 260°C (500°F). The screen material 102 area adjacent to the frame is thus encapsulated in the powdered epoxy. After about 5 to 10 minutes of heat and pressure (e.g. about 155 Bars (2250psi) to 27.6 Bars (400psi) the screen material 102 and frame 104 are removed and allowed to cool down to ambient room temperature. The cured powdered epoxy encapsulates the screen material, adjacent to the frame and the frame forming a unitary structure. Coating thickness to achieve good encapsulation, in certain aspects, is between 20 and 40 mils.

The tubular frame 104 has a plurality of crossmembers 106 that extend between and whose ends are connected to sides 107, 108 of the frame 104. End members 103, 105 are at the ends of the frame 104. The tubular frame 104 and its parts may be made of hollow or solid beams, tubes, bars, or rods of metal (e.g. steel, aluminum, zinc, stainless steel and/or alloys of any of these), plastic, or fiberglass. Metal and/or plastic parts may be welded together.

In one particular aspect the frame 104 is made of hollow square cross-section tubes 103, 104, 107, 108 with a 0.766 inch square cross-section and round cross-section tubes 106 with a 3.88 square cm (0.601 square inch) cross-section. The screen assembly 100 (and the frame 104) may have any suitable desired length and width. In one aspect the screening material is made of strands of 304, or 316 stainless steel and the frame is made of carbon steel; thus, the frame does not expand as much as the screening material during a heating step during which epoxy is being applied and the setting epoxy holds the stainless steel strands in an expanded state so the screening material, upon cooling of the screen assembly, is held in tension over the frame 104.

In one aspect the screening material is bonded to the frame with a powdered epoxy material. The frame is heated then dipped into a fluidized bed of the powder which completely encapsulates the frame in a semi-cured state and, in one particular aspect, with a thickness of about 35 mils. The frame and screening material are put on a heated platen with the screening material (in one case three layers 170 x 105 mesh, 105 x 64 mesh and 19 mesh glued together with a method disclosed herein) below the frame. Upon heating to about 232°C (450°F), the powdered adhesive is heated and flows down over the wires of the screening material. In one aspect the wires are partially coated and in another they are, preferably, completely encapsulated with the adhesive. The frame with the screening material on it is left on the heated platen until the coating is cured, being heated when it is curing. In one aspect the coating encapsulates the frame.

Figure 25 shows a glue bead pattern 110 made by a machine in accordance with the present invention with two moving manifolds, each with a plurality (in one aspect, sixteen) of spaced-apart glue dispensing nozzles. The manifolds are moved across the screening material (from left to right in Figure 25) dispensing beads of moisture-cure hot melt glue. The dark lines 112 represent a glue bead applied by the glue dispensers of a first manifold and the open lines 114 represent a glue bead applied by the glue dispensers of a second manifold. The screening material is moving beneath the moving manifolds and, thus, the pattern shown in Figure 25 is achieved. In one particular embodiment of a glue pattern as shown in Figure 25, the pattern is applied on coarse mesh, for example about 19 mesh, about 1.27m (50 inches) wide, with the total pattern width being about 1.24m (49 inches). The coarse mesh is unrolled continuously from a roll of about 183m (600 feet) in length (although the use of shorter and of longer rolls is possible) and moved continuously past and beneath the glue manifolds. The manifolds in this particular embodiment move about 3.73cm (1.46875 inches) back and forth and the distance between two nodes n is about 4.83cm (1.90 inches). The nodes themselves, which can be any desired length, are about 0.508cm (0.20 inches) long in this particular embodiment. In certain aspects, the hot melt glue is sufficiently viscous that it remains on top of the mesh or screening layer to which it is applied without falling away from it so a pattern is maintained and multiple layers can be glued together.

Figures 26A to 28G are top views of glue patterns. It is to be understood that the patterns shown are repeated across an entire surface of screening material and that the bead width, node length, node width, and intersection dimensions may be any desired dimensions, length, width, and/or height.

Figure 26A shows a glue pattern 120 which includes undulating glue bead lines 121, 122 with crests 123 of the glue bead line 121 superimposed on similar crests 125 of the glue bead line 122. Thus at the location of this superimposition there is more glue present than there is at other places in the glue bead lines 121, 122; thus these points of superimposition are stronger than other points along these glue bead lines. As shown in Figure 26B, there is significantly more glue at locations 129 of intersection of glue bead lines 127, 128 and the locations of intersection have a distinct oval or elliptical shape.

Figure 26C shows a pattern 120 like that in Figure 25; but in Figure 26D the crests or nodes of glue bead lines 131, 132 of a pattern 133 are overlapped or superimposed so that generally circular (as viewed from above) intersection locations 134 are formed.

Figures 26E to 26G illustrate glue bead patterns 135, 136, 137, 138 and 139 respectively, formed by intersecting glue bead lines from two spaced-apart glue-dispensing manifolds and/or glue dispensing nozzles. Of course one may produce glue bead patterns with three, four or more spaced-apart manifolds of glue dispensers.

Figures 27A to 27D illustrate glue bead patterns disclosed herein applicable to screening material by methods and machines disclosed herein. A pattern 140, Figure 27A, in one particular embodiment, has a distance "a" between pattern intersection points of about 3.73cm (1.46875 inches) and a distance "b" between pattern intersection points of about 7.37cm (2.9 inches). As shown in Figure 28A, (and as is true for any glue bead pattern disclosed herein) the pattern 140 may be turned ninety degrees for application to screening material. Also any screen assembly made with any pattern disclosed herein may have fluid introduced to any side of any such screen assembly.

A pattern 142, Figure 27B, in one particular embodiment, has a distance "c" between pattern intersection points of about 4.83cm (1.9 inches) and a distance "d" between pattern intersection points of about 76.2cm (3 inches). As shown in Figure 28B, the pattern 142 may be turned ninety degrees for application to screening material.

As shown in Figure 27C a pattern 144 in accordance with the present invention has glue bead lines that do not intersect. A distance "e", in one particular embodiment, between lines is about 4.05cm (1 19/32 inches). Figure 28C shows that the pattern 144 may be turned ninety degrees if desired.

Figure 27D shows a pattern 146 which has non-intersecting glue bead lines. A distance "f", in one particular embodiment, between lines is about 7.78cm (3 1/16 inches). Figure 28D shows the pattern 146 turned ninety degrees.

Figures 29A to 29K are top views of glue bead patterns 150 to 160, respectively.

Any glue bead pattern shown herein may, be produced with bead lines overlapping to form intersections, e.g. like those of Figures 26A to 26D.

Figure 30A shows a screen 210 a lower base, support or frame 212, three undulating mesh screens 214 on and/or bonded to the frame 212, and an upper mesh or screen 216. The screens 214 may themselves be mechanically connected together and/or bonded together, e.g. with epoxy, welding, and/or sintering. Rubber strips, plastic strips tape, cushion or cushions 218 are positioned between the screen 214 and the upper screen 216. The strip(s) or cushion(s) are optional. As shown the strip(s), tape(s), or cushion(s) 218 are secured to the screen 214 (or to crests thereof), but it is disclosed herein to secure them (or some of them) to the screen 216. To effect such securement any suitable glue, epoxy, weld, and/or sintering may be employed. The frame 212 may be any suitable known base, frame or support.

The screen 214 to be any known screen, mesh, screens, meshes, or combination thereof, mechanically connected together and/or bonded together, unbonded, or bonded at only certain locations and with any known shape as viewed either from above or on end (as in Figure 30). The upper screen 216 may be any known screen, mesh, screens, meshes, or combination thereof, connected and/or bonded together or unbonded, and with any known shape. As shown in Figure 30B, the screen 214 is three mesh screens bonded together with coarser mesh on the bottom, medium mesh in the middle, and finer mesh on top. The screen 216 as shown may be a scalping screen of a mesh coarser than the finest mesh of the screen 214 or of a multi-layer coarser mesh. In another aspect the screen 214 is a single screen of closely woven mesh made of any suitable material, e.g. stainless steel and/or plastic material and the screen 216 is a single screen of coarser mesh made of any suitable material (e.g. but not limited to stainless steel and/or plastic), with the screen 214 on a metal or plastic frame or support. Alternatively or additionally, instead of the frame 212 any known perforated plate, strip, or series of straps or strips may be used. A series of strips is not legally equivalent to a perforated plate.

In one aspect the strips 218 are fused plastic strips aligned with peaks of the undulating fine mesh. Such strips may be made of rubber (e.g. nitrile) or plastic, e.g. polypropylene, to inhibit or prevent abrasion of the finer meshes. Such strips can be glued to the bottom of the screen 216 and/or the screen 214. Also the screen 216 can be glued to the screen 214.

Figure 31 shows a screen 220 like the screen 210, but without the cushion members 218. A scalping screen 226 is secured at points 227 to a screen 224 on a base, frame, or support 222. The screens 224, 226 may be in any of the forms discussed above for the screens 214, 216, respectively and the base, frame, or support 222 may have any of the forms or alternatives discussed above for the base, frame, or support 212. The screen 226 may be secured to the screen 224 in any suitable way, including but not limited to with glue, epoxy, fused plastic and/or by welding and/or sintering.

There is disclosed a vibratory shaker system with a basket for mounting at least one screen for screening fluid introduced thereon, vibrator apparatus connected to the basket for vibrating the basket and the at least one screen, the at least one screen like any screen disclosed herein.

Figure 32 shows screening material glued together by any apparatus and/or method disclosed herein. The screening material 230 has been corrugated. One may corrugate screening material for use in any known so-called "three dimensional" screen or screen assembly. One, two, three, four or more combined layers of screening material may be corrugated using any known method and/or apparatus. Such corrugating may be done before or after the curing of glue used to glue layers together.

Figure 33 shows a screen assembly SC which has at least one layer of screen material L and a glue pattern that includes sub-patterns PA, PB and PC. Although only portions of the sub-patterns are shown, it is to be understood that they extend from one side of the screen assembly SC to the other and that different sub-patterns have abutting edges so that substantially all of the area (as viewed in Figure 33 of the screen assembly SC, except for outer boundaries) is covered by the sub-patterns.

As shown in Figure 33 fluid introduced to the screen assembly SC flows first to the sub-pattern PA area, then on to the sub-pattern PB area, then to the sub-pattern PC area, and the separated material flows off the screen assembly SL (to the bottom of the drawing sheet as shown in Figure 33). The sub-pattern PA has diamonds that are smaller than diamonds of the sub-pattern PB; and the diamonds of the sub-pattern PB are smaller than diamonds of the sub-pattern PC. Solids on top of the screen assembly SC will tend to move more slowly across the sub-pattern PA area than over the sub-pattern PB area; and solids on top of the screen assembly SC will tend to move more slowly over the sub-pattern PB area than over the sub-pattern PC area. Alternatively (as is true with any screen assembly herein disclosed with two, three or more sub-pattern areas with a length of screening material between portions of a glue pattern) fluid can be introduced first onto the sub-pattern PC area to flow over the sub-pattern PB area, then to the sub-pattern PA area, and then material on top of the screen assembly SL exits at the edge (top edge as viewed in Figure 33) of the sub-pattern PA area.

Although diamonds are shown in Figure 33, any glue pattern disclosed herein may be used with larger or smaller distances between glue portions - larger distances for speeding up solids moving across the screen assembly and smaller distances for slowing the solids movement. Although three sub-pattern areas are shown, two, four or more may be used on any screen assembly herein disclosed. Also, any part of a screen's area may have any sub-pattern; sub-patterns need not extend from one side of a screen assembly to the other.

Figures 34A to 34C illustrate a set of three screen assemblies S1, S2, and S3, each with at least one layer L1, L2, L3, respectively, of screening material and each with a similar glue pattern, yet with a difference in distance between glue portions of the glue patterns. Such a set (or any two) of the screens S1 to S3 may be used on a single vibratory separator or shale shaker when different fluid/solids residence time on top of a screen are desired. Material and/or solids will tend to move slowest across the screen assembly S1 with its glue pattern P1 and fastest across the screen assembly S3 with its glue pattern P3. Material and/or solids will move slower across screen assembly S2 with its glue pattern P2 than across the screen assembly S3.

Figures 35A to 35D show a screen assembly 240 which has a layer or layers 241 of screening material glued together in accordance with the present invention with hot melt moisture-curing glue. Side hookstrips 242 provide for mounting of the screen assembly 240 in an appropriate vibratory separator or shale shaker.

Figure 36A shows a support 250 for supporting one or more layers of screening material, including, but not limited to a layer with a glue pattern (any herein) described herein or two, three, four or more layers of screening material glued together as disclosed herein.

The support 250 has two pairs 251, 252 of opposed spaced-apart sides and a plurality of cross-members 253 extending between and attached to the sides 251. Notches may be cut in parts of the sides 251 to receive and hold ends of the cross-members 253.

The sides 251, 252 may be made by cutting from a solid sheet or plate a sub-rectangle out of the complete rectangle (with outer boundaries like those of the support 251, Figure 36A). Corner cuts are then made and portions 254 at each end and 251a at each side are bent or folded down. One or more dimples 255 projecting downwardly from a side or end raise that end with respect to a rail or other mounting structure of a shaker or separator to facilitate correct emplacement of an adjoining screen's end under the end of a screen assembly with the support 250.

Figure 37A shows a support 260 for supporting a layer of screening material with a glue pattern as any disclosed herein. The support 260 is made from a sheet or plate and has a pattern 264 of openings across its surface. A plurality of cross-members extend from one side of the support 260 to the other. A piece 265 at one end of the support 260 has an outer end that projects outwardly from the support 260 and a piece 266 has a shoulder part 266a against which an outer end (like the end of the piece 265) of another screen can be positioned. Layer 267 indicates any screening material or multiple layers thereof or as referred to herein.

Figure 38 shows a perforated plate 270 with a pattern of openings 271 across its surface and with a plurality of optional edge holes 272 which facilitate bonding of the plate to other structures and/or bonding of screening material to the plate. The plate may be of the type disclosed in European Patent Publication Number 1 002 588, having a plate or panel comprising a plurality of groups of perforations, each group comprising six generally equally triangular apertures arranged with their apices facing a central portion, wherein the apices of two opposing ones of said triangular apertures are spaced apart further than the apices of opposed ones of the remaining triangular apertures. The glued together layers of mesh may be glued in a pattern which reflects the areas blinded by the plate, such that the glue beads do not substantially blind the apertures formed in the plate or panel. In particular, the areas between the apices is elongate in one aspect, such that the area of the plate or panel where glue beads intersect is larger, such that the additional glue at the intersect does not blind the apertures, or does not blind them to a significant extent.

Figures 39A and 39B and Figure 40 illustrate apparatus 300 in accordance with the present invention for producing glued-together screen combinations in accordance with the present invention. A layer of screen mesh 302 is unwound from a roll 304 rotatable on a shaft 306 and moves over an idler roller 308 to isolation nip apparatus 310.

The isolation nip apparatus 310 receives the screen mesh 302 which passes under an idler roller 312 and then between two opposed rollers 314, 316 which help guide the mesh 302 in a straight path and provide tension to help maintain the mesh 302 relatively flat. In certain aspects, a brake may be used on the isolation nip apparatus; in other aspects, unlike isolation nip apparatus used in certain other industries and for producing certain other glued products, the rollers 314, 316 are, optionally, not "braked," i.e., no brake is applied to them so that wrinkling, or "quilting" of the screen mesh 302 is inhibited or prevented. By coating and/or wrapping one or both rollers 314, 316 with non-slip material, e.g., plastic, rubber, or polytetrafluoroethylene material (e.g., but not limited to in tape form or in textured tape form, see. e.g., Figure 41) slippage (e.g. laterally on the roller) of screen material on, against, over, or with respect to the rollers is inhibited or prevented, thus inhibiting or preventing unwanted screen layer vibration and wrinkling.

The screen mesh 302 is fed from the isolation nip apparatus 310 to a coating module 320 that has one, two, or more manifolds with multiple, spaced-apart glue dispensing nozzles (e.g., as described elsewhere herein). Heated glue is provided to the manifolds by a glue apparatus 392 via piping 392a (parts of which serve as structural support) which has pump apparatus for pumping heated glue to the manifold(s). Two such manifolds 322, 324 are shown. The screen mesh 302 moves over idler rollers 326, 328 and beneath the manifolds 322, 324 (e.g., but not limited to, as the manifolds of Figure 18A). Optionally additional idler rollers 323, 325 may be used to facilitate screen mesh movement and to assist in maintaining the screen mesh flat beneath the manifolds 322, 324. Any idler roller 323, 325, 326, 328 (and any idler roller in any other part of the apparatus of Figure 39A) may be removed or may be replaced with a stationary member such as a bar, beam, or rod. Arrows 329 (Figure 39A) indicate the directions of motion of the manifolds 322, 324 which are moved by manifold movement apparatuses 322a and 324a, respectively. In one aspect the manifolds move in opposite directions with respect to each other.

Laminator apparatus 330 (also called "laminator nip apparatus") combines the glue-laden screen mesh 302 with one, two, or more additional layers of screening material and a glued-together screen combination 360 exits from the laminator apparatus 330.

In the embodiment shown in Figures 39A, 39B and 40, a second screening material layer 303 is unwound from a roll 307 moving against a roller 301; and a third screening material layer 305 moving against a roller 311 is unwound from a roll 309. These layers pass, respectively, around rollers 332a and 332b and then around a top laminating roller 336. Figures 39B and 40 present different positions (each optional) for the rollers 301, 311, 332a, and 332b.

The three layers - screen mesh 302, screening material layers 303, 305 - pass between the top laminating roller 336 and a bottom laminating roller 338 which squeezes the layers together. The resulting glued-together screen combination 360 passes under a roller 337 and then over a roller 339. Rollers help reduce or eliminate mesh layer vibration and reduce wear on shafts on which they are mounted. Coated and/or taped rollers reduce or eliminate glue adherence to rollers.

The rollers 332a and 332b may be contoured or bowed as shown in Figures 42A and 42B and are sometimes referred to as "banana rolls." A roller 400 as in Figures 42A and 42B has a contoured body 401 and end mounting shafts 402. Optionally rollers 332a and/or 332b may be such banana rollers, as, optionally, may be any other roller in the system. These last rollers past or over which the mesh passes prior to entering between the rollers 336, 338 maintain the mesh in a desired flat and/or spread-out manner, inhibiting wrinkling and facilitating the deposition of a uniform desired glue bead.

The hot glue is spread up through the layers of screening material by: squeezing the rollers 336, 338 together; by heating the roller 336; by cooling the roller 338; by blowing hot air on the layer(s) entering the rollers; by heating the rollers or any of them past or against which the layer(s) move; and/or by replacing any such rollers with a heated stationary, shaft, bar or beam past or against which the layer(s) move.

The curing glued-together screen combination 360 moves under a roller 337; then, optionally, over a roller 339; and then onto a hollow cardboard tube or roll (or other suitable mount) 352 from which it is rolled into a roll 350. Separator material 355 (e.g., kraft paper, etc.) from a roll 357 is on a central tube or shaft 354 is rolled up with the screening material 360 to inhibit or prevent the screening material adhering to itself in the roll 350. The roll 350 is removable from supports 356.

The apparatus shown in Figures 39A and 39B is controlled by controller apparatus 370 (or "OCP") which may have one or more operator's control panel. The controller apparatus 370 can be set for various screening material of various dimensions and for various glues and glue patterns. The control apparatus 370 controls the rollers, shafts, motors, pumps, manifolds, dispensers, and other apparatus of the system. Control connections and lines are indicated by lines to various system components. The pressure applied to nip rollers is controlled by the control apparatus 370 and/or by control apparatus at the location of the rollers, as may be the water misting apparatus 390. The "Hot oil Unit" 380 provides heated fluid (e.g. oil) to heat the roller 336, e.g., by pumping heated fluid (e.g., oil) into the roller 336. The "Chill Unit" 382 provides cooling fluid to cool the roller 338, e.g., by pumping cooled fluid into the roller 338.

A water applicator 390 may be used to spray a mist of moisture onto the screen combination 360 to facilitate curing of moisture-cured glue. In one aspect (as shown) the water applicator is positioned to spray the screen combination 360 between rollers 337, 339. In another embodiment, it is positioned before the rollers 336, 338. Alternatively, multiple misters are used in multiple locations. When water is applied in the position between rollers 337 and 339 curing of the glue is facilitated and occurs relatively quickly, i.e., in twenty to thirty hours as compared to six to seven days when water is applied before the layers enter between the laminator rollers. Also, in addition to speeding up curing of the glue, the tackiness of the glue in the resulting screen combination 360 is reduced which facilitates shearing, handling, shipping, and the application (optional) of side hookstrips. In one aspect the water application 390 includes six spaced-apart nine inch spray nozzles through which water at a rate of about 1.141 (three-tenths of a gallon) per hour is sprayed onto the screen combination.

In certain particular embodiments the screen mesh 302 is stainless steel 19 mesh wire; the screening material layer 303 is 100 or 180 mesh; and the screening material layer 305 is 130 or 250 mesh - all about 127cm, 96.5cm, 76cm (50, 38, or 30 inches) wide.

Figure 41 shows a piece TP of textured PTFE tape which may be used in accordance with the present invention to wrap rollers used in systems in accordance with the present invention; including, but not limited to, the bottom and/or top rollers of a nip apparatus that receives one or more mesh layers with hot glue thereon and/or therein. A pattern PN shown on the tape is imparted to heated glue contacted by the tape.

When moisture-curing hot melt glue is used, it cures with loss of heat and exposure to moisture. In a typical room at ambient temperature such glue will cure over time without any extra moisture applied to it. With systems as in Figures 39A and 40, glue is discharged down onto the mesh. At about 121°C (250°F). The glue's temperature begins to drop when it contacts the wire and begins curing when exposed to moisture. The distance between the glue nozzles and a laminating nip is, preferably, such that the glue does not progress too far in the curing cycle. The laminating nip squeezes the meshes together. The top roller, optionally, heats the wires in contact with it, reducing the viscosity of the glue that contacts the top layers. The open spaces in the meshes provide vertical tunnels allowing the glue to move upward. The bottom roller cools the bottom side of the bottom mesh increasing the viscosity of the glue's bottom surface, increasing its resistance to flow downward. The laminating nip rollers pull the wire meshes through the system. The top roller may be a heated steel roller that heats upper and/or finer meshes to facilitate the flow of glue into their open spaces.

Due to the smoothness of a roller (e.g., but not limited to, a roller made of steel or other metal) and the fineness of the top mesh layers, there may be slippage between the top and bottom layers. The addition of textured tape on the roller(s) allows the transfer of heat to the upper mesh(es). The texture and softness of the tape grips the upper and/or finer meshes and inhibits or prevents this slippage. The softness of the tape inhibits or prevents glue from extruding above the upper and/or fine mesh(es) upper surface(s) creating obstacles or barriers to flow across the screen surface. The textured tape may be a vinyl tape approximately 1mm thick or a PTFE tape of similar thickness.

After winding in a roll (e.g. roll 350, Figure 40) the layered mesh rolls may be sheared, boxed, and shipped to an end user. Without the water mister between rollers 337, 339 the layered mesh combination 360 may take five to seven days to cure adequately. Often after shearing, the multi-layer screen combinations are stacked in a box for use or shipment. If the cure of the glue is not sufficient, the screens may stick to each other. A non-stick paper or cardboard placed between the screens may inhibit or prevent this sticking together. The placement of the mister after the laminating nip and before winding material onto a roll has reduced glue cure time to about a day.

By maintaining flat the layer or layers which receive the hot glue from one or more dispensing nozzles, uniformity of deposited glue bead size is enhanced. If the distance between the nozzle and the layer(s) varies, glue bead size can be non-uniform. In one aspect the distance from the outlet end of the nozzle(s) to the mesh layer or layers onto which the glue is deposited is between about 6.3mm (one-fourth inch) to 19mm (three-fourth inch), and in one particular aspect is about one-12.7mm (half inch). Rotating rollers help reduce vibration in the mesh layer(s) being processed.

## Claims

1. A method for making a shale shaker screen, the method comprising the steps of unrolling a first layer of wire mesh screening material (302) from a first roll (304) and applying glue to said first layer of wire mesh screening material with a glue application apparatus, and unrolling at least a second layer of wire mesh screening material and applying the second layer of wire mesh screening material to the first layer of wire mesh screening material to form a shale shaker screen wherein the rate of movement of said first layer of wire mesh screening material beneath the glue application apparatus is between 0.025m/s to 0.15m/s (5 feet per minute to 30 feet per minute) **characterised in that** the method further comprises the step of passing the first layer of wire mesh screening material through an isolation nip formed by two opposed rollers (314, 316) before applying the glue.

2. A method in accordance with Claim 1, the method comprising applying the glue in a glue pattern to said first layer of wire mesh screening material, the applying carried out by powered moving mechanical glue application means.

3. A method as claimed in Claim 2, wherein the glue is heated moisture-curing hot melt glue, the method further comprising the step of heating the glue.

4. A method as claimed in Claim 3 further comprising the step of applying moisture to glue in the glue pattern following application of the moisture-curing hot melt glue to the at least one layer of wire mesh screening material.

5. A method as claimed in any of Claims 2 to 4, further comprising the step of moving with powered mechanical screen movement apparatus the said first layer of wire mesh screening material beneath the powered moving mechanical glue application means.

6. A method as claimed in any of Claims 2 to 5 wherein the powered moving mechanical glue application means includes a patterned roller having a glue pattern thereon for applying glue in said glue pattern to said first layer of wire mesh screening material.

7. A method as claimed in any of Claims 2 to 6, further comprising the step of moving at least one glue dispensing manifold with a plurality of spaced-apart glue dispensing nozzles above said first layer of wire mesh screening material to apply the glue pattern.

8. A method as claimed in any of Claims 2 to 7, further comprising the steps of moving two spaced-apart glue dispensing manifolds each with a plurality of spaced-apart glue dispensing nozzles above said first layer of wire mesh screening material to apply the glue pattern.

9. A method as claimed in Claim 7 or 8, wherein the at least one glue dispensing nozzle is secured immovably to a main body, the method further comprising applying with the at least one glue dispensing nozzle secured immovably to the main body at least one shearable glue bead across a width of the wire mesh screening material so that shearing the wire mesh screening material along the length of the at least one shearable glue bead produces separate sections of the wire mesh screening material.

10. A method as claimed in Claim 9, wherein a plurality of spaced-apart glue dispensing nozzles, are secured immovably to the main body each for applying a separate shearable glue bead to the wire mesh screening material, the method further comprising applying a plurality of spaced-apart shearable glue beads to the wire mesh screening material across the width thereof.

11. A method as claimed in any preceding claim, further comprising tensioning said first layer of wire mesh screening material below the glue application apparatus.

12. A method as claimed in any preceding claim, wherein the method further comprises continuously moving said first layer of wire mesh screening material beneath the glue application apparatus.

13. A method as claimed in any preceding claim, further comprising introducing a third layer of wire mesh screening material to form a shale shaker screen having three layers of wire mesh screening material.

14. A method as claimed in Claim 13, wherein the third layer of wire mesh screening material is combined with said first layer of wire mesh screening material following application of glue to the at least one layer of wire mesh screening material.

15. A method as claimed in any preceding claim, comprising the further step of mounting the shale shaker screen on screen assembly support means to form a shale shaker screen assembly.

16. A method as claimed in Claim 15, wherein the screen assembly support means is from the group consisting of frame, strip support, perforated sheet metal, and perforated plate.

17. A method as claimed in any preceding claim, further comprising the step of attaching hookstrip apparatus on each of two spaced-apart sides of the layers of wire mesh screening material.

18. A method as claimed in any preceding claim, further comprising the step of rolling said first and second layer of wire mesh screening material in a roll following application of glue thereto.

19. A method as claimed in Claim 18, further comprising positioning separator material with respect to the first layer of wire mesh screening material to prevent undesired gluing together of the first layer wire mesh screening material within the roll.

20. A method as claimed in any preceding claim, wherein the first layer of wire mesh screening material is a layer of coarse mesh.

21. A method as claimed in Claim 2 or any claim dependent on Claim 2, wherein the pattern includes a plurality of intersections of lines of glue.

22. A method as claimed in any preceding claim, wherein said shale shaker screen is wound on a rewind apparatus **characterised in that** a reel of separator material is unwound from a roll on to at least one surface of said shale shaker screen.

23. A method as claimed in any preceding claim, wherein coolant is applied to the shale shaker screen.

24. A method as claimed in Claim 23, wherein said coolant is sprayed on to said shale shaker screen.

25. A method as claimed in Claim 23 or 24, wherein said coolant is applied to the top of the shale shaker screen.

26. A method as claimed in any of Claims 23 to 25, wherein the coolant is applied to the side of the shale shaker screen to which the second layer of wire mesh screening material was applied.

27. A method as claimed in any preceding claim, wherein the step of unrolling the second layer of wire mesh screening material is unwound over a banana roller.

28. A method as claimed in any preceding claim, wherein the isolation nip is not braked.

29. A method as claimed in any preceding claim, wherein the at least one roller is coated in non-slip material.

30. A method as claimed in any preceding claim, wherein said first layer of wire mesh screening material passes over an idler roller (312) before passing between said nip formed by the first and second rollers (312,314).

## Patentansprüche

1. Verfahren zum Herstellen eines Schlammschüttelsiebs, wobei das Verfahren die folgenden Schritte umfasst: Abrollen einer ersten Lage aus Drahtgeflecht-Siebmaterial (302) von einer ersten Rolle (304) und Aufbringen von Klebstoff auf die erste Lage aus Drahtgeflecht-Siebmaterial mit einer Klebstoffaufbringvorrichtung und Abrollen wenigstens einer zweiten Lage aus Drahtgeflecht-Siebmaterial und Aufbringen der zweiten Lage aus Drahtgeflecht-Siebmaterial auf die erste Lage aus Drahtgeflecht-Siebmaterial, um ein Schlammschüttelsieb zu bilden, wobei die Geschwindigkeit der Bewegung der ersten Lage aus Drahtgeflecht-Siebmaterial unter der Klebstoffaufbringvorrichtung im Bereich von 0,025 m/s bis 0,15 m/s (5 Fuß pro Minute bis 30 Fuß pro Minute) liegt, **dadurch gekennzeichnet, dass** das Verfahren ferner den Schritt des Bewegens der ersten Lage aus Drahtgeflecht-Siebmaterial durch einen durch zwei gegenüberliegende Walzen (314, 316) gebildeten Isolierwalzenspalt, bevor der Klebstoff aufgebracht wird, umfasst.

2. Verfahren nach Anspruch 1, wobei das Verfahren das Aufbringen des Klebstoffs in einem Klebstoffmuster auf die erste Lage aus Drahtgeflecht-Siebmaterial umfasst, wobei das Aufbringen durch mit Leistung versorgte, sich bewegende mechanische Klebstoffaufbringmittel ausgeführt wird.

3. Verfahren nach Anspruch 2, wobei der Klebstoff ein erwärmter feuchtigkeitsaushärtender, heißschmelzender Klebstoff ist, wobei das Verfahren ferner den Schritt des Erwärmens des Klebstoffs umfasst.

4. Verfahren nach Anspruch 3, das ferner den Schritt des Aufbringens von Feuchtigkeit auf den Klebstoff in dem Klebstoffmuster nach dem Aufbringen des feuchtigkeitsaushärtenden, heißschmelzenden Klebstoffs auf die wenigstens eine Lage aus Drahtgeflecht-Siebmaterial umfasst.

5. Verfahren nach einem der Ansprüche 2 bis 4, das ferner den Schritt des Bewegens der ersten Lage aus Drahtgeflecht-Siebmaterial unter den mit Leistung versorgten, sich bewegenden mechanischen Klebstoffaufbringmitteln mittels einer mit Leistung versorgten mechanischen Siebbewegungsvorrichtung umfasst.

6. Verfahren nach einem der Ansprüche 2 bis 5, wobei die mit Leistung versorgten, sich bewegenden mechanischen Klebstoffaufbringmittel eine mit Muster versehene Walze umfassen, auf der ein Klebstoffmuster vorhanden ist, um Klebstoff in dem Klebstoffmuster auf die erste Lage aus Drahtgeflecht-Siebmaterial aufzubringen.

7. Verfahren nach einem der Ansprüche 2 bis 6, das ferner den Schritt des Bewegens wenigstens eines Klebstoffabgabeverteilers mit mehreren voneinander beabstandeten Klebstoffabgabedüsen über der ersten Lage aus Drahtgeflecht-Siebmaterial umfasst, um das Klebstoffmuster aufzubringen.

8. Verfahren nach einem der Ansprüche 2 bis 7, das ferner die Schritte des Bewegens von zwei voneinander beabstandeten Klebstoffabgabeverteilern, wovon jeder mehrere voneinander beabstandete Klebstoffabgabedüsen besitzt, über der ersten Lage aus Drahtgeflecht-Siebmaterial umfasst, um das Klebstoffmuster aufzubringen.

9. Verfahren nach Anspruch 7 oder 8, wobei die wenigstens eine Klebstoffabgabedüse unbeweglich an einem Hauptkörper befestigt ist, wobei das Verfahren ferner das Aufbringen wenigstens eines scherfähigen Klebstoffwulstes über die Breite des Drahtgeflecht-Siebmaterials mittels der wenigstens einen Klebstoffabgabedüse, die an dem Hauptkörper unbeweglich befestigt ist, umfasst, so dass ein Scheren des Drahtgeflecht-Siebmaterials in Längsrichtung des wenigstens einen scherfähigen Klebstoffwulsts getrennte Abschnitte des Drahtgeflecht-Siebmaterials ergibt.

10. Verfahren nach Anspruch 9, wobei mehrere voneinander beabstandete Klebstoffabgabedüsen, wovon jede einen getrennten scherfähigen Klebstoffwulst auf das Drahtgeflecht-Siebmaterial aufbringt, am Hauptkörper unbeweglich befestigt sind, wobei das Verfahren ferner das Aufbringen mehrerer voneinander beabstandeter scherfähiger Klebstoffwulste auf das Drahtgeflecht-Siebmaterial in dessen Breitenrichtung umfasst.

11. Verfahren nach einem vorhergehenden Anspruch, das ferner das Spannen der ersten Lage aus Drahtgeflecht-Siebmaterial unter der Klebstoffaufbringvorrichtung umfasst.

12. Verfahren nach einem vorhergehenden Anspruch, wobei das Verfahren ferner das ununterbrochene Bewegen der ersten Lage aus Drahtgeflecht-Siebmaterial unter der Klebstoffaufbringvorrichtung umfasst.

13. Verfahren nach einem vorhergehenden Anspruch, das ferner das Einbringen einer dritten Lage aus Drahtgeflecht-Siebmaterial umfasst, um ein Schlammschüttelsieb mit drei Lagen aus Drahtgeflecht-Siebmaterial zu bilden.

14. Verfahren nach Anspruch 13, wobei die dritte Lage aus Drahtgeflecht-Siebmaterial mit der ersten Lage aus Drahtgeflecht-Siebmaterial kombiniert wird, nachdem Klebstoff auf die wenigstens eine Lage aus Drahtgeflecht-Siebmaterial aufgebracht worden ist.

15. Verfahren nach einem vorhergehenden Anspruch, das den weiteren Schritt des Anbringens des Schlammschüttelsiebs an Siebanordnungs-Unterstützungsmitteln umfasst, um eine Schlammschüttelsiebanordnung zu bilden.

16. Verfahren nach Anspruch 15, wobei die Siebanordnungs-Unterstützungsmittel aus der Gruppe gewählt sind, die besteht aus einem Rahmen, einem Streifenträger, einen Lochblech und einer Lochplatte.

17. Verfahren nach einem vorhergehenden Anspruch, das ferner den Schritt des Befestigens von Hakenstreifenvorrichtungen an jeder von zwei beabstandeten Seiten der Lagen aus Drahtgeflecht-Siebmaterial umfasst.

18. Verfahren nach einem vorhergehenden Anspruch, das ferner den Schritt des Walzens der ersten und der zweiten Lage aus Drahtgeflecht-Siebmaterial in einer Walze umfasst, nachdem der Klebstoff darauf aufgebracht worden ist.

19. Verfahren nach Anspruch 18, das ferner das Positionieren von Trennmaterial in Bezug auf die erste Lage aus Drahtgeflecht-Siebmaterial umfasst, um ein unerwünschtes Zusammenkleben der ersten Lage aus Drahtgeflecht-Siebmaterial in der Walze zu verhindern.

20. Verfahren nach einem vorhergehenden Anspruch, wobei die erste Lage aus Drahtgeflecht-Siebmaterial eine Lage aus einem Grobgeflecht ist.

21. Verfahren nach Anspruch 2 oder einem von Anspruch 2 abhängigen Anspruch, wobei das Muster mehrere Schnittpunkte von Klebstofflinien enthält.

22. Verfahren nach einem vorhergehenden Anspruch, wobei das Schlammschüttelsieb auf eine Windenvorrichtung gewickelt wird, **dadurch gekennzeichnet, dass** eine Wicklung aus Trennmaterial von einer Rolle auf wenigstens eine Oberfläche des Schlammschüttelsiebs abgewickelt wird.

23. Verfahren nach einem vorhergehenden Anspruch, wobei auf das Schlammschüttelsieb ein Kühlmittel aufgebracht wird.

24. Verfahren nach Anspruch 23, wobei das Kühlmittel auf das Schlammschüttelsieb gesprüht wird.

25. Verfahren nach Anspruch 23 oder 24, wobei das Kühlmittel auf die Oberseite des Schlammschüttelsiebs aufgebracht wird.

26. Verfahren nach einem der Ansprüche 23 bis 25, wobei das Kühlmittel auf die Seite des Schlammschüttelsiebs aufgebracht wird, auf die die zweite Lage aus Drahtgeflecht-Siebmaterial aufgebracht wurde.

27. Verfahren nach einem vorhergehenden Anspruch, wobei im Schritt des Abwickelns der zweiten Lage aus Drahtgeflecht-Siebmaterial ein Abwickeln über einer Bananenwalze erfolgt.

28. Verfahren nach einem vorhergehenden Anspruch, wobei der Isolierwalzenspalt nicht gebremst wird.

29. Verfahren nach einem vorhergehenden Anspruch, wobei die wenigstens eine Walze mit einem Gleitverhinderungsmaterial beschichtet ist.

30. Verfahren nach einem vorhergehenden Anspruch, wobei sich die erste Lage aus Drahtgeflecht-Siebmaterial über eine Leerlaufwalze (312) bewegt, bevor sie sich durch den Walzenspalt bewegt, der durch die erste und die zweite Walze (312, 314) gebildet ist.

## Revendications

1. Procédé de fabrication d'un crible pour séparateur vibrant, le procédé comprenant les étapes consistant à dérouler une première couche de matériau de criblage en treillis de fil métallique (302) à partir d'un premier rouleau (304) et à appliquer de la colle sur ladite première couche de matériau de criblage en treillis de fil métallique avec un dispositif d'application de colle, et à dérouler au moins une deuxième couche de matériau de criblage en treillis de fil métallique et à appliquer la deuxième couche de matériau de criblage en treillis de fil métallique sur la première couche de matériau de criblage en treillis de fil métallique pour constituer un crible pour séparateur vibrant dans lequel la vitesse de déplacement de ladite première couche de matériau de criblage en treillis de fil métallique au-dessous du dispositif d'application de colle se situe entre 0,025 m/s et 0,15 m/s (5 pieds par minute à 30 pieds par minute), **caractérisé en ce que** le procédé comprend, de plus, l'étape consistant à faire passer la première couche de matériau de criblage en treillis de fil métallique à travers une emprise d'isolement formée par deux rouleaux opposés (314, 316) avant d'appliquer la colle.

2. Procédé selon la revendication 1, le procédé consistant à appliquer de la colle suivant une configuration de colle sur ladite première couche de matériau de criblage en treillis de fil métallique, l'application étant réalisée par des moyens mécaniques d'application de colle à déplacement commandé par moteur.

3. Procédé selon la revendication 2, dans lequel la colle est une colle chauffée thermofusible pour traitement par l'humidité, le procédé comprenant, de plus, l'étape consistant à chauffer la colle.

4. Procédé selon la revendication 3 comprenant, de plus, l'étape consistant à appliquer de l'humidité à la colle selon la configuration de la colle à la suite de l'application de la colle thermofusible pour traitement par l'humidité à au moins une couche de matériau de criblage en treillis de fil métallique.

5. Procédé selon l'une quelconque des revendications 2 à 4, comprenant, de plus, l'étape consistant à déplacer avec le dispositif mécanique de déplacement de crible actionné par moteur ladite première couche de matériau de criblage en treillis de fil métallique au-dessous des moyens mécaniques d'application de colle à déplacement actionné par moteur.

6. Procédé selon l'une quelconque des revendications 2 à 5 dans lequel les moyens mécaniques d'application de colle à déplacement actionné par moteur comportent un rouleau configuré comportant sur lui une configuration de colle pour appliquer la colle selon ladite configuration de colle sur ladite première couche de matériau de criblage en treillis de fil métallique.

7. Procédé selon l'une quelconque des revendications 2 à 6 comprenant, de plus, l'étape consistant à déplacer au moins un collecteur de distribution de colle doté d'une pluralité de buses de distribution de colle distantes les unes des autres au-dessus de ladite première couche de matériau de criblage en treillis de fil métallique afin d'appliquer la configuration de colle.

8. Procédé selon l'une quelconque des revendications 2 à 7, comprenant, de plus, les étapes consistant à déplacer deux collecteurs de distribution de colle distants l'un de l'autre dotés, chacun, d'une pluralité de buses de distribution de colle distantes les unes des autres au-dessus de ladite première couche de matériau de criblage en treillis de fil métallique afin d'appliquer la configuration de colle.

9. Procédé selon la revendication 7 ou 8, dans lequel la, au moins une, buse de distribution de colle est fixée de façon inamovible sur un corps principal, le procédé consistant, de plus, à appliquer avec la, au moins une, buse de distribution de colle fixée de façon inamovible sur le corps principal un cordon de colle apte à être cisaillé à travers une largeur du matériau de criblage en treillis de fil métallique de façon à ce que le cisaillement du matériau de criblage en treillis de fil métallique sur la longueur du, au moins un, cordon de colle pouvant être cisaillé, aboutisse à des sections séparées du matériau de criblage en treillis de fil métallique.

10. Procédé selon la revendication 9, dans lequel une pluralité de buses de distribution de colle placées à distance les unes des autres est fixée de façon inamovible sur le corps principal, chacune servant à appliquer un cordon de colle séparé pouvant être cisaillé sur le matériau de criblage en treillis de fil métallique, le procédé consistant, de plus, à appliquer, à distance les uns des autres, une pluralité de cordons de colle pouvant être cisaillés sur le matériau de criblage en treillis de fil métallique à travers sa largeur.

11. Procédé selon l'une quelconque des revendications précédentes, consistant, de plus, à appliquer une tension sur ladite première couche de matériau de criblage en treillis de fil métallique au-dessous du dispositif d'application de colle.

12. Procédé selon l'une quelconque des revendications précédentes, dans lequel le procédé consiste, de plus, à déplacer de façon continue ladite première couche de matériau de criblage en treillis de fil métallique au-dessous du dispositif d'application de colle.

13. Procédé selon l'une quelconque des revendications précédentes, consistant, de plus, à introduire une troisième couche de matériau de criblage en treillis de fil métallique pour former un crible destiné à un séparateur vibrant comportant trois couches de matériau de criblage en treillis de fil métallique.

14. Procédé selon la revendication 13, dans lequel la troisième couche de matériau de criblage en treillis de fil métallique est combinée avec ladite première couche de matériau de criblage en treillis de fil métallique après l'application de colle sur au moins une couche de matériau de criblage en treillis de fil métallique.

15. Procédé selon l'une quelconque des revendications précédentes comprenant l'étape supplémentaire consistant à monter le crible pour séparateur vibrant sur des moyens de support de l'ensemble de crible afin de former un ensemble de crible pour séparateur vibrant.

16. Procédé selon la revendication 15, dans lequel les moyens de support de l'ensemble de crible font partie du groupe constitué d'un bâti, d'un support de bande, d'une tôle métallique perforée et d'une plaque perforée.

17. Procédé selon l'une quelconque des revendications précédentes comprenant, de plus, l'étape consistant à fixer un dispositif du type "hook-strip" sur chacun des deux côtés, espacés l'un de l'autre, des couches de matériau de criblage en treillis de fil métallique.

18. Procédé selon l'une quelconque des revendications précédentes, comprenant, de plus, l'étape consistant à enrouler lesdites première et deuxième couches de matériau de criblage en treillis de fil métallique sur un rouleau après y avoir appliqué de la colle.

19. Procédé selon la revendication 18, consistant, de plus, à positionner un matériau séparateur par rapport à la première couche de matériau de criblage en treillis de fil métallique pour éviter un collage non souhaité de la première couche de matériau de criblage en treillis de fil métallique dans le rouleau.

20. Procédé selon l'une quelconque des revendications précédentes, dans lequel la première couche de matériau de criblage en treillis de fil métallique est une couche à maillage grossier.

21. Procédé selon la revendication 2 ou selon l'une quelconque des revendications dépendantes de la revendication 2 dans lequel la configuration inclut une pluralité d'intersections de lignes de colle.

22. Procédé selon l'une quelconque des revendications précédentes, dans lequel ledit crible pour séparateur vibrant est enroulé sur un dispositif de rembobinage, **caractérisé en ce qu'**une bobine de matériau séparateur est dévidée à partir d'un rouleau sur au moins une surface dudit crible pour séparateur vibrant.

23. Procédé selon l'une quelconque des revendications précédentes dans lequel un agent de refroidissement est appliqué sur le crible pour séparateur vibrant.

24. Procédé selon la revendication 23, dans lequel ledit agent de refroidissement est pulvérisé sur ledit crible pour séparateur vibrant.

25. Procédé selon la revendication 23 ou 24, dans lequel l'agent de refroidissement est appliqué sur le dessus du crible pour séparateur vibrant.

26. Procédé selon l'une quelconque des revendications 23 à 25, dans lequel l'agent de refroidissement est appliqué sur le côté du crible pour séparateur vibrant sur lequel la deuxième couche de matériau de criblage en treillis de fil métallique a été appliquée.

27. Procédé selon l'une quelconque des revendications précédentes, dans lequel l'étape consistant à dérouler la deuxième couche de matériau de criblage en treillis de fil métallique s'opère sur un rouleau élargisseur arqué.

28. Procédé selon l'une quelconque des revendications précédentes, dans lequel l'emprise d'isolement ne comporte pas de frein.

29. Procédé selon l'une quelconque des revendications précédentes, dans lequel le, au moins, un rouleau est recouvert d'un matériau antidérapant.

30. Procédé selon l'une quelconque des revendications précédentes, dans lequel ladite première couche de matériau de criblage en treillis de fil métallique passe sur un rouleau tendeur (312) avant de passer dans ladite emprise formée par les premier et second rouleaux (312, 314).
